# EUROPEAN PATENT SPECIFICATION

(11) **EP 3 787 400 B1**
(45) Date of publication and mention of the grant of the patent: **16.10.2024**
(21) Application number: 19720121.3
(22) Date of filing: 26.04.2019
(51) Int. Cl.: A01M 1/14

(54) **A DEVICE TO ATTRACT AND INDUCE BLOOD-FEEDING BITING FLIES TO LAND ON IT, AND METHODS RELATED TO THIS DEVICE**
VORRICHTUNG ZUM ANZIEHEN UND INDUZIEREN BLUTSAUGENDER STECHFLIEGEN, SICH DARAUF ZU SETZEN, UND VERFAHREN DAFÜR
DISPOSITIF POUR ATTIRER ET INDUIRE DES MOUCHES PIQUEUSES HÉMATOPHAGES À ATTERRIR SUR CELUI-CI, ET PROCÉDÉS ASSOCIÉS À CE DISPOSITIF

(30) Priority: 30.04.2018 EP 18170163
(43) Date of publication of application: 10.03.2021
(73) Proprietor: Guerin, Patrick, 2114 Fleurier (CH); Bernáth, Balázs, 1076 Budapest (HU)
(72) Inventor: Guerin, Patrick, 2114 Fleurier (CH); Bernáth, Balázs, 1076 Budapest (HU)
(74) Representative: Bovard SA Neuchâtel
(86) International application number: PCT/EP2019/060762
(87) International publication number: WO 2019/211195

(56) References cited:
- EP-A1- 2 759 198
- EP-A1- 2 854 524
- CN-A- 107 613 765
- JP-B2- 3 955 886
- US-B2- 7 516 572

## Description

### Technical Field

The invention relates to a device that attracts and induces blood-feeding biting flies to land on its surface comprising at least a portion incorporating a substance for killing or for retaining said insects to die. More particular, the invention relates to a device having a tubular body comprising a coloured outer surface and a low reflectivity inner surface to attract blood-feeding biting flies in high numbers such as tsetse flies, stable flies and other biting flies. The invention relates also to methods for attracting and inducing blood-feeding biting flies to land on it using the device of the invention. The invention relates also to a method to fabricate at low cost said device.

### State of the art

### The tsetse fly problem

Tsetse flies (Diptera: Glossinidae) transmit trypanosomes that cause sleeping sickness in humans (Human African Trypanosomiasis) and nagana in animals (Animal African Trypanosomiasis) in sub-Saharan Africa. While the number of cases of sleeping sickness continues to decline, the disease burden on animals is a major impediment to agricultural development on the continent. Following insemination, the female tsetse produces a single larva at a time by nourishing it from milk glands in its abdomen for some 7-12 days. The fly can undertake multiple pregnancy cycles during her lifespan of 2-3 months. This high investment in progeny and low birth rate results in a slow increase in population growth such that any increase in daily mortality has a profound effect on population decline. Daily elimination of just 1% of flies in a population is sufficient for control (Vale, Bursell and Hargrove, 1985). For this reason, tsetse populations are vulnerable to the use of visually attractive traps and insecticide-impregnated targets designed to remove flies from a population. Both types of devices depend on the attraction of tsetse to objects with blue and black colours, and the distance over which the devices attract flies can be improved by baiting them with animal odours. Traps are usually monoconical, pyramidal or biconical in shape, inducing flies to enter from below and then move upwards to light inside the device to be caught in an insect-netting cone at the trap apex. In view of the high level of susceptibility of tsetse to insecticides, simpler insecticide-impregnated 2D targets were developed to induce flies to land on them and so come into contact with an insecticide for the purpose of killing them. 2D visual targets have been developed over decades for tsetse fly population control and are now known to be most effective when endowed with combination of blue-black colours (Challier *et al.,* 1977; Vale, 1993; Lindh *et al.,* 2009; Rayaisse *et al.,* 2012). Such visually-attractive targets consist of combinations of cloth and insect-netting screens that can vary in size from 0.125 m² to 2 m², depending on the tsetse species being targeted. From studies in Zimbabwe, for example, it has been estimated that a density of 4 odour-baited targets per km² is sufficient to control savannah tsetse species (Hargrove, 2003).

### The stable fly problem

The blood-feeding stable fly, *Stomoxys calcitrans* (Diptera, Muscidae), is one of the major biting fly pests on cattle, horses and other livestock worldwide. This aggressive fly requires a number of blood meals to produce its first batch of some 50-120 eggs that it lays in rotting vegetable material and can produce multiple clutches of eggs during its 8-12 day life span. Stable fly larvae breed in a range of moist rotting deposits associated with livestock production including manure, animal feedstuff spillover, soiled animal bedding, old hay and silage pits, all of which can be found around traditional cow-houses and stables. This fly poses an ever-increasing problem in modern intensive livestock-producing facilities and feedlots where silage from maze is used as a feedstock (Skovgård and Nachman, 2012). When fly numbers exceed 20 per animal the discomfort suffered due to biting results in the animals bunching together which induces heat stress. Animals consequently feed less, resulting in major economic losses due to reduced weight gain in calves and feeder animals, and to reduced milk production by lactating cows (Cook *et al.,* 2011; Skovgård and Nachman, 2012). Global annual losses because of this biting fly on animal production runs into tens of billions of dollars.

Poultry manure mixed with sawdust recycled as a fertilizer in soil for horticultural production and rotting vegetable matter left on the ground at vegetable production sites provides an ideal medium for stable fly propagation in Western Australia (Cook *et al.,* 2011). In Costa Rica, where residues from pineapple production are recycled in the soil, nearby dairy farms regularly suffer massive stable fly infestations with over 700 flies per animal (Solórzano *et al.,* 2015). Sugar-cane waste associated with increasing production of alcohol as a biofuel in Brazil contributes to an increasing number of stable fly population explosions on dairy farms and cattle ranches in the southern part of the country (Ferreira de Souza Dominghetti *et al.,* 2015). The ability of stable flies to breed in lawn clippings, seaweed and within zoos has allowed the stable fly to become a pest of man in urban and recreational settings.

Sanitation practices on animal production facilities predominate as methods for controlling stable flies. Treating oviposition sites around facilities with insecticides has only a moderate effect due to the variety and complexity of substrates on which the female stable fly can lay her eggs, and the fact that the developing larvae and pupal stages of the fly are well protected inside the organic matter. For this reason, the use of traps and targets for stable fly control has been investigated, but not to the same extent as for tsetse. Stable fly traps can consist of translucent fiberglass panels (Williams, 1973), a fiberglass cylinder (Broce, 1988) or other types of plastic cylinders (Taylor and Berkebile, 2006; Hogsette and Kline, 2017) covered with adhesive film or glue that serves to capture the flies that land. However, compared to the fiberglass traps, a 2D half-blue and half-black cloth target, like that used for tsetse, can catch over 6 times more stable flies (Foil *et al.,* 2006), and different 2D white plastic panels catch two times or more stable flies (Berseford and Sutcliffe, 2006; Zhu *et al.,* 2015). Experiments with weathered insecticide-impregnated blue fabrics suggest that treated targets like those used for tsetse population management could be used for stable fly control (Hogsette *et al.,* 2008). White panel targets treated with insecticide deployed on dairy farms in Canada were shown to significantly reduce the population growth rate of stables flies as a result of the lethal dose of insecticide the stably fly acquires once it lands on a treated target (Beresford and Sutcliffe, 2010).

### The tubular body solution

Practical considerations have dictated that visually attractive targets for biting flies such as tsetse and stable flies should have the shape of a flat panel or screen, but such a design results in loss of efficiency in attracting such flying insects. In practice, 2D visual targets are unavoidably affected by parallax since their apparent size as seen by insects orbiting or flying by changes continuously and they are hardly visible when seen by the flying insect from the side. This has the consequence that an insect flying by or circling a 2D target will unavoidably lose visual contact with it periodically even though it is highly probable that insects such as biting flies need to keep continuous visual contact with an object to successfully land on it. While newly developed blue/black small 2D visual targets are remarkably good at attracting tsetse flies, only about half of the attracted flies land on them (Lindh *et al.,* 2009). The challenge is to change the overall topology of visual targets to help to overcome drawbacks without increasing costs. Simple truly 3D visual targets made of robust self-supporting structures that are constantly visible to an approaching insect irrespective of its positions in space offer a superior alternative. 3D devices can also incorporate surfaces less exposed to weather. Some of these aspects are currently incorporated into existing tsetse traps (Challier *et al.,* 1977; Colvin and Gibson, 1992), but these devices are very poor at inducing biting tsetse flies that land on them to enter as invariably less than 30% get trapped (Lindh *et al.,* 2009; Rayaisse *et al.,* 2012).

Whereas an insect attracted to a visually attractive device initially undertakes an oriented flight track to approach it, within the vicinity of the device the insect invariably increases its angular velocity by, for example, circling it. Insects have compound eyes that compensate for motion parallax with densely packed smaller ommatidia in the frontal eye region and larger ommatidia laterally. A biting fly circling an object mostly in the horizontal plane is able to provide itself with a near constant optical flow provided the object that has attracted it presents a homogeneous aspect over a range of heights when viewed from the side. Although some currently used traps for tsetse flies have an approximate circular shape, they are not efficient enough.

Other aspects of fly behaviour need to be taken into account when the aim is to induce an insect to land - the crucial step required on a visually attractive device treated with a contact insecticide. One is the habit of biting flies to drop to at lower flight level around the base of an attractive host animal or device. This has been systematically observed in laboratory experiments with tsetse flies. Tsetse, stable flies and horse flies do the same on hosts where they eventually land on the legs and underbelly of large mammals to take a blood-meal. The propensity of flies to fly around the bottom of objects has been a major issue in terms of increasing field efficiency of traps for tsetse. These traps are mostly made of textiles and their attraction efficiency is too low to be really useful. In early designs both savannah and forest tsetse species escaped in high numbers from the bottom of traps they had successfully entered. Later trap designs incorporated complicated-to-sow trap floors and sloping sheets of textile to funnel entering flies into trap cages. There is thus a need for a new and better device that has a much higher efficiency for biting flies compared to all the solutions of prior art which all remain unsatisfactory. EP 2 759 198 discloses a device for attracting and inducing blood-feeding biting flies to land on it and to kill them.

### Summary of the invention

It is the aim of this invention to provide a considerable improved device to attract and induce blood-feeding biting insects such as tsetse flies, stable flies and other biting insects to land on it and to kill them. The device of the invention allows to obtain much higher efficiency, i.e. a much higher landing rate, and so a higher killing rate, than what can be achieved with visual targets of prior art.

More precisely the invention relates to tubular shaped devices, also defined as visual targets, which comprise insecticide-treated or adhesive-treated surfaces and which have much higher attraction and efficiencies in inducing the attracted insects to land relative to 2D targets or other devices of prior art. The characteristic of the tubular body to present a homogeneous aspect over a range of heights when viewed from the side by an orbiting biting fly is crucial in that it allows the insect to stabilize its flight around the object. Next, the insect needs to decrease its forward speed to land at a velocity that is close to zero at touchdown. To achieve this deceleration, all the flying insect needs to do is reduce its speed proportional to the perceived angular speed (Brady, 1972a) of the attractive surface which it is approaching. In this scenario, an attractive tubular body set with its central axis parallel to the local vector of gravitational acceleration (vertical) can provide the appropriate visual cues.

A behaviour to be exploited to biting flies to land is their propensity to alight on borders, rims and edges of objects. Whereas image expansion and flight speed deceleration accompany object approach, local visual features of an object like rims and edges serve as salient visual cues for a point on which to land. 2D objects with a high perimeter to surface area ratio have been shown to serve as better landing stimuli for tsetse, and these biting flies land preferentially on the corners and lower edges of visually attractive devices. The propensity of biting flies to exploit the lower parts of visually attractive objects has not been exploited in prior art devices developed for their control, for even where a tubular body has been employed for tsetse flies it has been presented with its central axis set horizontally with respect to the ground (Hargrove, 1980). To solve these problems the invention proposes a tubular body whose walls are oriented parallel to the local vector of gravitational acceleration (vertical) and which is fixed or suspended with its lower rim above the ground, freely accessible to the biting flies. Additionally, the tubular body has a well determined geometrical shape and the combination of that shape with a specific colour provides a surprising effect and considerably improves the efficiency in terms of the number of flies that land on it because of its particular geometrical and colour characteristics.

More precisely the invention is achieved by a device for attracting and inducing blood-feeding biting flies to land on it, as described in the claims 1 to 16.

### Brief description of the drawings

Further details of the invention will be more apparent upon reading the following description accompanied by the appended figures:
FIG. 1 illustrates an embodiment of the invention;
FIG. 2 illustrates a cross section of a tubular body of the invention in a vertical plane;
FIG. 3 illustrates the 1960 CIE colour diagram of a phthalogen blue or turquoise blue colour of an outer surface of a tubular body of the invention;
FIG. 4 illustrates the 1960 CIE colour diagram of a preferred low reflectance material of an inner surface of a tubular body of the invention;
FIG. 5 illustrates an embodiment of a tubular body comprising a supporting pole.
The figure illustrates the use of a tubular body set parallel to the local vector of gravitational acceleration;
FIG. Fig. 6 illustrates an embodiment of a tubular body fixed to a supporting pole, in a configuration set parallel to the local vector of gravitational acceleration;
Fig. 7 shows reflective spectra of tissues used in the device of the invention;
Fig. 8 shows the efficacy of visual targets of the invention tested in a wind tunnel;
Fig.9 shows the efficacy of blue visual targets of the invention;
Fig.10 shows the number of repeated landings made by individual *G. pallipides* on drum targets.

### Description of the invention

For purposes of clarity, the term biting fly/flies used here means those fly species (Class Insecta; Order Diptera) that bite man and animals. Also, in this document it is understood that reflected light means reflected and/or scattered and/or diffused or diffracted back by the surfaces of the device. A reference value of reflection R is defined as a reflection for a wavelength of 500nm. The wording "efficiency" in this document has to be understood broadly and refers generally to the efficiency of attracting and/or fixing and/or killing biting flies that land on a surface of the device of the invention but that may also be killed in the close neighbourhood of the device.

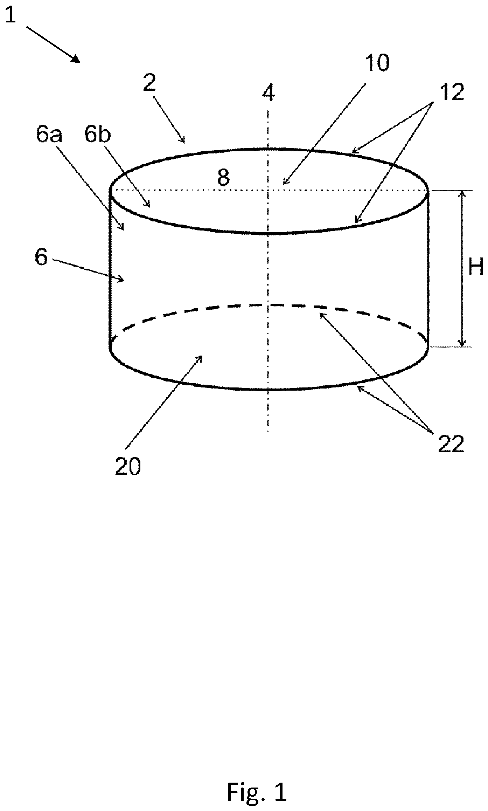

Fig. 1 shows a preferred embodiment of the device of the invention to attract and induce blood-feeding biting flies to land on it. The device 1 comprises a tubular body 2 that is defined by a central axis 4 and has a height H defined by the length of said central axis 4. The tubular body 2 comprising a wall 6 parallel to said central axis 4 and defining cross sections perpendicular to said central axis 4.

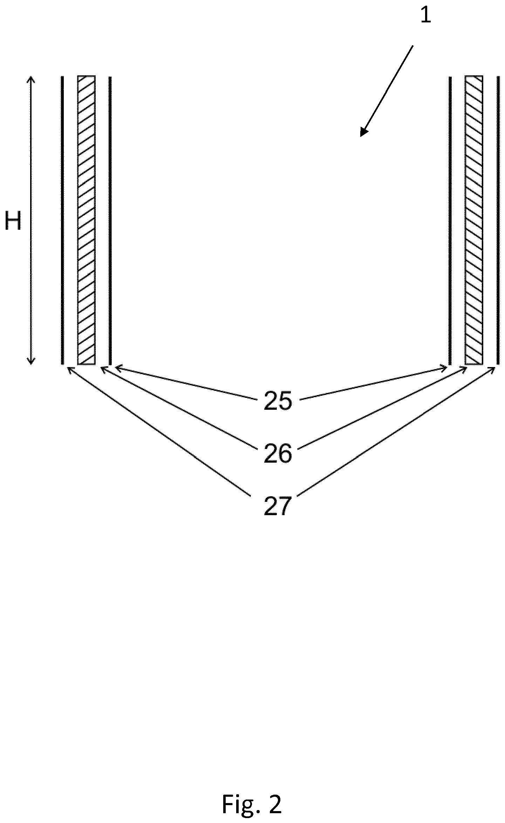

When in use, the central axis 4 of the said tubular body 2 is oriented preferably parallel to the local vector of gravitational acceleration (vertical) and the tubular body is placed above the local ground surface on which it is fixed or suspended. The tubular body 2 has a first opening 10 defining a first rim 12 and a second opening 20 defining a second rim 22. Said first rim 12 and second rim 22 are connected by said wall 6 which has an outer surface 6a and an inner surface 6b as illustrated in Fig. 2. As further explained in detail, the device has a lateral dimension greater than its height, the wording lateral being defined as in any plane comprising said first rim.

The said outer surface 6a or said inner surface 6b has a blue colour or is substantially colourless. As explained in detail in the experimental section it is the combination of the specific shape of the device with the colours of said outer surface 6a and said inner surface 6b that provides the surprising high attraction and, consequently, the high efficiency of the device 1 at inducing biting flies to land on it.

In embodiments said outer surface 6a or inner surface 6b has a blue colour having x, y coordinates defined in the 1960 CIE colour diagram, having an x value defined between 0.145 and 0.225 and a y value defined between 0.185 and 0.305.

In embodiments said outer surface 6a or said inner surface 6b is substantially colourless, and having in the 1960 CIE colour diagram an x value defined between 0.210 and 0.420 and a y value defined between 0.22 and 0.43.

In embodiments said outer surface 6a or said inner surface 6b is a black surface. The highest efficiencies are obtained by the following combinations:
- outer surface 6a and inner surface 6b are both blue;
- outer surface 6a and inner surface 6b are both black;
- outer surface 6a is blue and inner surface 6b is black;
- outer surface 6a is black and inner surface 6b is blue;

In variants, the outer surface 6a or the inner surface 6b may have any dark colour such as a dark brown colour.

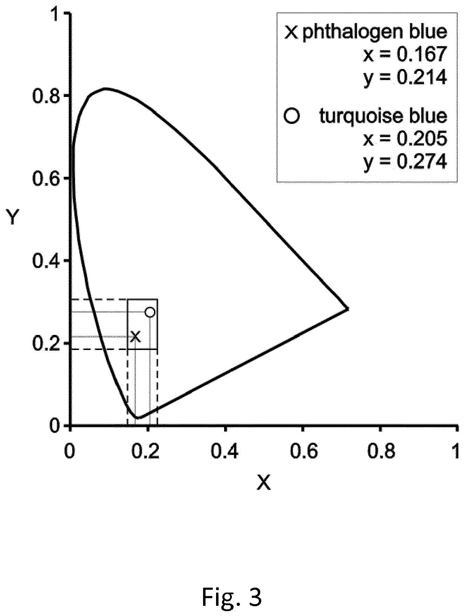

In an advantageous embodiment the outer surface 6a of the tubular body has a blue colour defined in the x-y coordinates of the 1960 CIE colour diagram. In that 1660 CIE colour diagram the colour has an x value defined between 0.145 and 0.225 and with a y value defined between 0.185 and 0.305. This CIE value range covers phthalogen blue and turquoise blue colours (Fig. 3). In advantageous embodiments the outer surface has a maximum reflectivity Rₘₐₓ lower than 40% within the wavelength range between 360 nm and 700 nm, the reflectivity being defined as the fraction of light being reflected and/or scattered by said surfaces.

In an embodiment said blue colour is phthalogen blue or equivalent. In another embodiment said blue colour is turquoise blue as defined hereafter.

In an embodiment the range of said x, y values are between, respectively, 0.145-0.185 (x range) and 0.185-0.245 (y range) for phthalogen blue and between, respectively, 0.185-0.225 (x range) and 0.245-0.305 (y range) for turquoise blue.

In a preferred embodiment said inner surface 6b has a lower reflectivity than said outer surface 6a. The reflectivity of said inner surface 6b is defined as the fraction of light being reflected and/or scattered by its surface and is defined for illuminating light having wavelengths between 350 nm and 700 nm. The value of the reflection of said inner surface 6b is lower than the reflection of said outer surface 6a by 20% preferably lower by 10%, even more preferably lower by 5%. In embodiments, the reflection of the outer surface 6a and/or the inner surface 6b has a flat spectral shape, defined in that said reflection has a value between 0.9 x R and 1.1 x R defined over a wavelength range between 350nm and 700 nm, preferably having a value between 0.95 x R and 1.05 x R defined over a wavelength range between 350nm and 700 nm, wherein R is a reference reflectivity defined at 500nm. The formula 0.95 x R means that the reflectivity is 95% of the reflectivity R at 500nm and the formula 1.05 x R means that the reflectivity is 105% of the reflectivity R at 500nm.

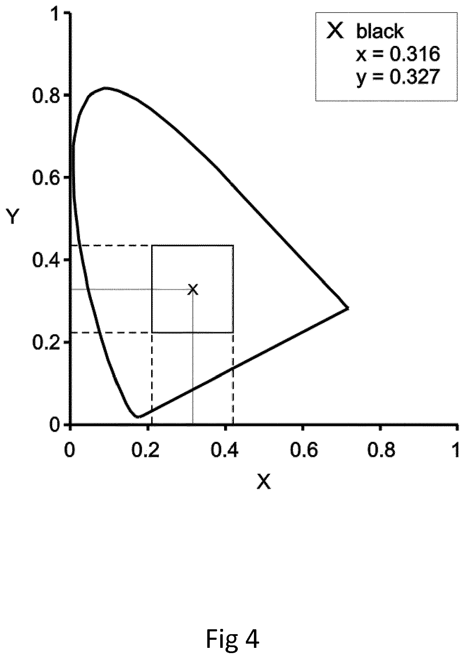

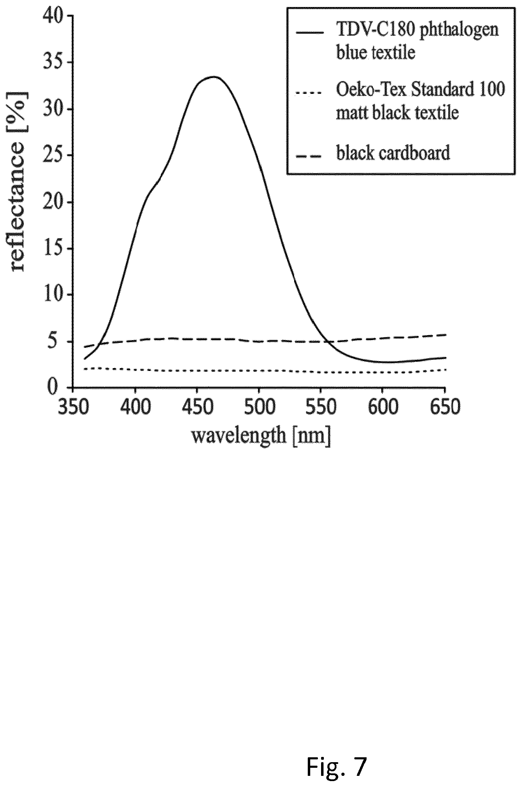

Said inner surface 6b is preferably colourless defined in the 1960 CIE colour diagram. A colourless surface may be grey of matt black and has preferably an x value defined between 0.210 and 0.420 and a y value defined between 0.22 and 0.43 in the 1960 CIE colour diagram (Fig. 4). Said inner surface 6b has a flat reflection spectrum, as defined above, within the wavelength range between 360 nm and 700 nm (see Fig. 7).

The largest dimension, defined in any horizontal cross section 8 of the tubular body 2, defined perpendicular to said central axis 4, is greater than said height H.

In an embodiment said largest dimension, perpendicular to said central axis 4, is smaller than 2 m and at least 1.5 times greater than said height H.

In a preferred embodiment said largest dimension is at least 2 times greater than said height H. In an advantageous embodiment said tubular body 2 is a cylinder whose largest dimension in said cross section 8 is greater than 11.5 cm and smaller than 200 cm and equals or is greater than said height H. In an embodiment said tubular body 2 is a cylinder whose largest dimension in said cross section 8 is 40 cm and is 25 cm in any vertical plane comprising said axis 4.

It is understood that the tubular body 2 needs not be a perfect cylinder but may have a cylindrical shape and may have different cross sections, defined in any plane perpendicular to said axis 4, along the length of said axis 4. Cross sections may for example have a convex polygon shape having at least 6 sides or the wall may have a corrugated shape defined in a plane comprising central axis 4. In a variant, the border of cross sections defined in any plane perpendicular to said axis 4 may also have a corrugated shape. In an embodiment said tubular body 2 has different shaped lateral cross sections 8 along the length of said central axis 4. In an embodiment at least one of said cross sections has a greatest dimension, defined perpendicular to said central axis 4, which is smaller than 2 m and at least 2 times greater than said height H.

It is understood that said first opening 10 defining the first rim 12 and said second opening 20 defining the second rim 22 need not be equal in size. The lateral dimension of said second opening 20, defined in a plane 8 substantially perpendicular to said central axis 4, can vary between 0.9 and 1.1 times said first opening 10.

In an embodiment said tubular body may be closed in the cross section 8 comprising said first opening 10 defining a first rim 12 and/or in the cross section 8 comprising said second opening 20. The closure may be realized by material whose outer surface has the same colour as the outer surface of the tubular body. In variants, the closure may be realized by material whose outer surface has any of said tubular body surface colours. In another variant, closure of first opening 10 and of second opening 20 may be realized in a different one of said colours. It is also understood that, in variants, closure of first opening 10 and/or of second opening 20 may comprise on the outer surface a plurality of portions that have different reflectivities, i.e. the surface of the closure must not necessarily be a uniformly reflecting surface.

In an embodiment said tubular body 2 comprises inner 6b and outer 6a surfaces of said wall 6 of which at least the outer surface 6a has been treated with at least an UV absorber substance. In a variant said outer surface 6a may comprise an UV absorbing surface.

In an embodiment said tubular body 2 comprises an inner surface 6b and outer surface 6a of which at least the outer surface 6a has been treated with a chemical substance. In an embodiment said inner surface 6b and/or said outer surface 6a may comprise portions treated with an UV absorber and/or portions treated with a chemical substance. For example, in a variant only the side of the wall 6 comprising said first rim 12 and/or said second rim 22 may comprise a chemical substance or a surface impregnated with a chemical substance, and/or an UV absorber and/or an UV absorber surface.

In an embodiment said chemical substance is preferably any biodegradable insecticide with the ability to poison biting flies when contacting with their cuticle after landing on the tubular body. The preferred group of substances are synthetic, in which case the preferred substance is deltamethrin.

In an embodiment said chemical substance is any insecticide operating upon contact with it and possessing the ability to poison biting flies. It is generally understood that said chemical substance may be a mixture of chemical substances, or a mixture of isomers of the same substance. In variants, said chemical substance is any contact insecticide. In an embodiment any element or a portion of such an element of the device 1 may be treated with insecticide. It is understood that at least said outer surface 6a may comprise physical elements and microstructures to improve contact with an insecticide by the biting flies once they have landed on the tubular body 2.

In an embodiment said tubular body comprises at least said outer surface 6a carrying or treated with insect glue to retain biting flies that subsequently die after landing on the tubular body. In an embodiment said tubular body comprises at least one surface carrying or treated with insect glue for mass trapping of biting flies.

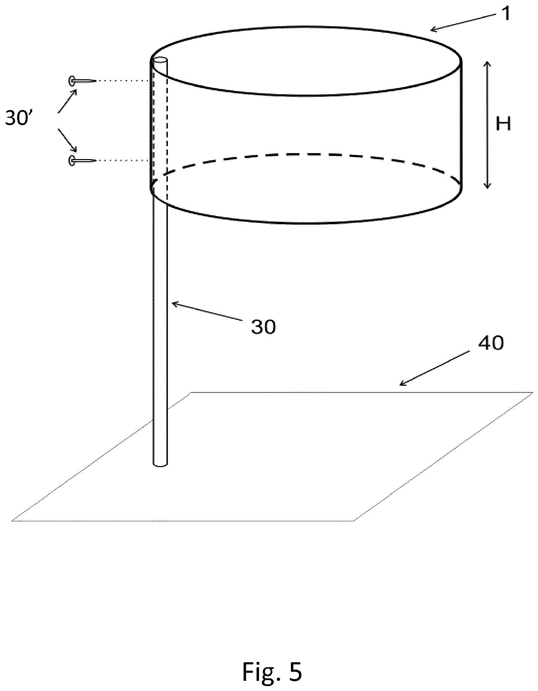

In an embodiment said device 1 comprises preferably stationary fixing means such as a pole 30 as illustrated in Fig.5. The tubular body of the device may be attached by any means such as screws 30'. In a variant said device 1 comprises suspension means to fix, in use of the device, said tubular body 2 above the ground using a pole oriented parallel to the local vector of gravitational acceleration (set vertically). The pole may be attached, for example, laterally preferably to the inside side of the tubular body wall (Figure 5). It is understood that the device may comprise said pole, or, in a variant, that the device is attached, in use, to an existing pole, a tree trunk, or to a portion of a construction that is smaller in diameter than any diameter of the tubular body, defined parallel to said axis 4.

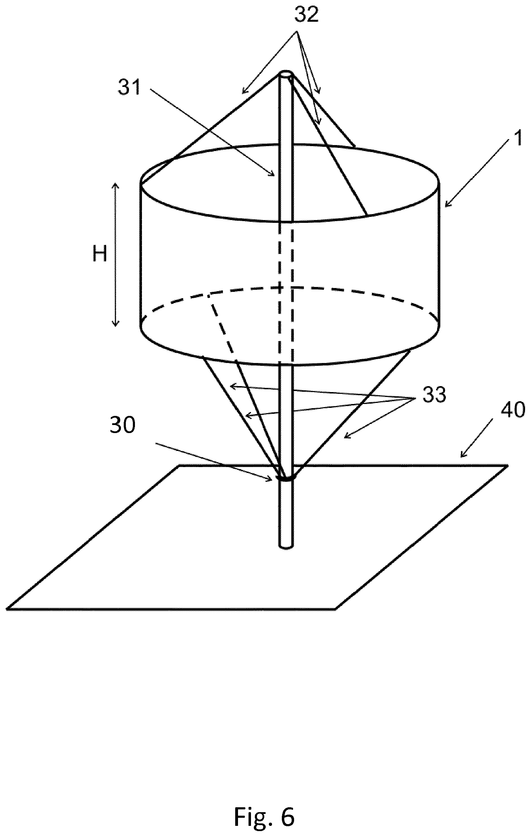

In embodiments different suspension means may be devised such as suspension wires 32, 33, as illustrated in Fig. 6. Suspension wires may be attached to an upper part 31 of a pole 30 that is outside the volume of the device 1 as illustrated in Fig. 6. Suspension means may be also tape or cords or elastic suspension means. Suspending a device to a support is well known to the person skilled in the art and will not be further commented here. In a variant, said suspension means and/or said pole may comprise chemical substances.

In methods to capture biting insects the tubular body may also be deployed on the ground so that its second rim 22 is at least partially in contact with the surface relative to which the device is deployed. When the device 1 is intended to be deployed so that at least a portion of said tubular body is in contact with said ground, the device may comprise, in an embodiment, stabilisation means to assure its stability of position relative to the surface on which the device is positioned. In an embodiment said stabilisation means may comprise hooks, or pins. Said stabilisation means may be the incorporation of at least a weight arranged at said lower rim 22. A wide variety of stabilisation means and their combinations may be considered such as for example glue, or silicone. Said stabilisation means are chosen in function of the nature of the ground, in the case that the device is to be deployed directly in contact with said ground.

It is generally understood that said central axis 4 is preferably parallel with the direction of the local gravity, but in a variant said axis may have an angle to the direction of the gravity, as in the case that the tubular body is deployed in contact with the local ground or in case it is deployed at a height relative to that ground.

In use, the tubular body 2 is oriented preferably substantially parallel to the local vector of gravitational acceleration (i.e. set vertically) so that its central axis is oriented vertically as illustrated in Figure 6. In a variant, said suspension means comprise at least two wires attached equidistant to the said upper and lower rims of the tubular body at predetermined positions. In a variant the device comprises at least three wires arranged to suspend said device 2, as illustrated in Figure 6.

It is understood also that the mass of the portion of the device to the side of said second rim 22 may be higher than the mass of the device to the side of said first rim 12. For example, weights may be added to said lower rim 22 to improve the verticality of the device. Also, means may be provided to the device so that it may be dropped from an aircraft such as a drone and so the device has a high probability to land so that said central axis is vertical. In an example said means may comprise three legs arranged to said lower rim 2 and the device may comprise landing means to assure a substantially vertical position upon landing. Said landing means may be a tissue attached to said first rim 12 and/or a weight arranged to the side of said second rim 22.

It is also understood that the device may comprise specific optical elements that may enhance the landing probability of the biting flies. For example, arrays of zero order filters may be adapted or integrated to at least said outer surface 6a. Such zero order filters are known to have surprisingly bright colour effects and may be produced for example in plastic at low cost (Knop, 1978).

In an embodiment said outer surface 6a and/or said inner surface 6b may comprise optical polarizing elements that are arranged to provide linearly polarized light. This embodiment may improve the efficiency of attracting and inducing said insects to land. In a variant said device may comprise at least one optical polarizing element and at least one zero-order filter. Said optical polarizing elements are preferably arranged on the said outer surface 6a or on said inner surface 6b to the side of said second rim 22. In a variant said polarizing elements and/or said zero-order filters may be arranged as strips with their normal vector being parallel to said central axis. In a variant said polarizing elements and/or said zero-order filters may be arranged in a helicoidal arrangement relative to said central axis 4.

It is understood that said outer surface 6a and/or said inner surface 6b may comprise optical elements which may improve the landing probability by the biting flies. Said optical elements may be for example, but not exclusively:
- sheet polarizers
- elements forming strong intensity contrast and/or colour contrast
- elements inducing sensation of illusory motion in the moving observer
- elements in colors other than phthalogen blue or turquoise blue that serve to improve the landing probability by a particular biting fly species or biting fly species group.

In a variant, device 1 may be suspended to allow it to move in the wind in a manner to improve the probability of biting flies to land on it. In embodiments elements may be adapted to any surface of the device to enhance its movement amplitudes under windy conditions.

It is understood that said outer surface 6a may have a blue colour other than phthalogen blue or turquoise blue that serves to improve the probability of landing by a biting fly species or group of species of biting flies on the device. It is also understood that, in variants, the outer surface 6a and/or inner surface 6b may comprise a plurality of portions that have different reflectivities, i.e. the surfaces 6a and/or 6b must not necessarily uniformly reflecting surfaces.

In variants, the device of the invention 1 may comprise a substance that allows to kill biting flies when they are approaching the device, i.e without physical contact with any of the surfaces of the device 1. For example, a volatile substance may be applied on the outer surface 6a so that a biting fly is killed by the toxicity of the substance in the vapour phase when it approaches the surface at a close distance, for example a distance of smaller than 5 cm, preferably smaller than 2 cm or a distance smaller than 1cm from said outer (or inner) surface.

In an embodiment said volatile substance is a pyrethroid or other volatile insecticide or mixture of volatile insecticides with the ability to poison biting flies through its toxicity in the vapour phase.

The invention is also achieved by a method for attracting and inducing blood-feeding biting flies to land, comprising the steps (a-c) of:
a) providing a device 1 as described here;
b) orienting the device 1 so that its central axis 4 is substantially parallel to the local vector of gravitational acceleration (vertical) and the device is fixed above the ground, and optionally providing suspension means;
c) fixing said device 1 above the ground by means of a pole and/or by said suspension means.

In an embodiment step c) comprises at least one of the following steps and in any order:
c1) suspending said tubular body 2 by suspension wires from a pole, set vertically on the ground and placed so that its central axis 4 is vertical;
c2) setting the tubular body 2 above the ground using suspension means at heights anywhere between 10 cm and 150 cm;
c3) setting the tubular body 2 above the ground using said suspension means at a height above the ground or ground vegetation at which a given species of biting fly is known to prefer to fly;
c4) setting said tubular body 2 above the ground using said suspension means at any height above the ground or ground vegetation at which a given species group or groups of species of biting flies prefer to fly;
c5) setting said tubular body 2 above the ground using said suspension means at a height above ground or ground vegetation that renders it visible to any flying biting flies;
c6) suspending or fixing said device 1 to a portion of an indoor or outdoor construction;
c7) fixing or suspending said tubular body 2 above ground either indoors or outdoors where sunshine can reach it;
c8) placing the device at a distance of at least 1 meter from walls or other obstacles in a manner to provide an unobstructed view from all directions of said device by biting flies flying in the vicinity;
c9) permit the device 1 comprising an insecticide and/or insect glue to serve in monitoring biting fly populations by placing a 10 x 15 cm card bearing adhesive on one side that allows it to adhere to the outside surface of the tubular body wall and with a phthalogen blue or turquoise blue colour on the outward facing side of the card that when covered with insect glue serves to retain alighting biting flies for the purpose of counting them.

The invention is also achieved by a method of fabrication at low cost of the device 1 of the invention and comprises the steps (a'-f') of:
a') providing a semi-rigid rectangular piece of transparent plastic sheeting that, when folded along its long end into a circle, is the size of the tubular body of predetermined dimensions;
b') cutting a piece of phthalogen-blue or turquoise-blue cloth that is sufficient in area to cover the part of the plastic sheet forming the outside surface of the tubular body wall, and cut a second piece of low reflectivity textile that is sufficient in area to cover the part of the plastic sheet forming the inside surface of the tubular body wall;
c') sowing the two rectangular pieces of cloth together along their long sides to form a sleeve that covers the semi-rigid plastic sheet when pulled over it;
d') pre-impregnating said sleeve of cloth with a contact insecticide using established procedures (Torr *et al.,* 1992);
e') pulling the sleeve formed by the two pieces of insecticide-impregnated cloth over the semi-rigid plastic sheet that serves to form the wall of the device in a manner that the phthalogen-blue or turquoise-blue textile is arranged on the outside surface of the tubular body wall and the second textile of low reflectivity is arranged on the inside surface of the tubular body wall;
f') alternatively, applying steps a', b', c' and e' as described and endowing the tubular body 2 with at least one surface comprising insect glue to retain biting flies after landing on the tubular body 2.

The method of fabrication comprising after steps e' or f' the steps g', h', i':
g') attach the tubular body to the top of a pole placed preferably inside the tubular body with the central axis of the tubular body oriented parallel to said pole 4;
h') attachment to the pole of the tubular body wall with either nails, screws or staples at that point on the tubular body wall where the plastic sheet and layers of textile are joined;
i') alternatively, attach 4 spacers of the same length orthogonally like spokes of a wheel at two heights from the top of the pole placed at the central axis of the tubular body (2) to permit fixing its upper rim 12 and lower rim 22 to the free ends of the spacers in a manner to fix the tubular body equidistant around the top of the pole.

In an embodiment the method of fabrication comprises a step of defining and cutting a length of said pole to achieve a predetermined height of said device 1 in case that said device 1 must be fixed in the ground with said pole.

In an embodiment of the method of fabrication, the tubular body may be mass-produced at minimal unit cost using common lamination technologies widely used for the packaging, storage and distribution of foodstuffs. The low-reflectance inside surface and phthalogen-blue or turquoise-blue outside surface of the tubular body wall can be laminated onto either side of a polymer board or other biodegradable support. A thin low-reflectance transparent multipurpose film of polyester or of another appropriate polymer is superposed on both sides of this laminated sheet. The surface of the film facing outwards from the wall is sufficiently rough or diffusely reflective to prevent specular reflection and to produce Lambertian reflection. The film provides a protective layer against rain, high air humidity and fungal attack. The film contains preferably an UV absorber to prevent fading of colours on the tubular body wall under direct sunlight. The film also serves as substrate on the tubular body wall for retention of a contact insecticide or insect glue on the outside and, as required for the biting fly species being targeted for control, on the inside tubular body wall. This multi-layered pre-treated tubular body wall is produced in big pre-creased rolls facilitating the detachment of a rectangular piece of the laminated material from the roll that, when folded along its long end to form a cylinder, forms the wall of the tubular body of a predetermined size. Each blank is pre-equipped with peel-off strips attached to adhesive points/Velcro fasteners on the blank's short borders. Joining such adhesive points permits ready formation of the tubular body. Alternatively, only the tubular body wall is produced in rolls and the mounted tubular body is covered with a replaceable transparent multipurpose film of polyester or another appropriate polymer film impregnated with an insecticide or with a transparent film than can support insect glue. For deployment, the tubular body so equipped can be attached along its inside wall to a pre-existing light metal-bar circular frame or circular plastic frame using clips regularly placed along its upper and lower inside rims at manufacture. The upper rim of the holding frame is at a height from ground that is appropriate for the biting fly species being targeted for control. The frame is screwed to the top of a stative set in a base that is filled with sand on deployment to serve as ballast to provide stability and to prohibit the mounted tubular body from being inadvertently knocked down or blown down by wind. The tubular body, or the film on the tubular body, can be replaced as required on such a circular frame set on a stative. The invention is also achieved by the use of the device 1 as described above for attracting, inducing to land, killing or retaining blood-feeding biting flies.

### Experimental methods and results

In this section the discovery of an efficient device presenting a surprisingly high efficiency for attracting and killing blood-feeding biting flies is described.

### Laboratory experimental biting flies

Pupae of the savannah tsetse species *Glossina pallidipes* were from a colony at the International Atomic Energy Agency (IAEA) Siebersdorf Laboratories, Austria, originating from flies collected near Tororo, Uganda in 1975. Emerging flies were sexed and separated daily, and maintained in rectangular cotton netting (1-mm mesh) cages (15 cm W, 55 cm L, 15 cm H) in an environmental cabinet under 10h high frequency fluorescent lighting in the photophase at 26°C, 85% relative humidity (RH) and 14h scotophase at 22°C, 85% RH with 1 hour "dawn" and "dusk" periods in the first and last hours of the photophase. Flies were fed 3-4 days after emergence and then at 5-day intervals with defibrinated bovine blood heated to 37°C. Experiments with teneral and starved flies were performed following identical procedures, respectively, 72 ± 5 hours after emergence and 120 ± 5 hours after a blood-meal, in the first 180 minutes or the last 180 minutes of the photophase.

### Free-flight arena experimental methods

Movement *per se* is a visual cue long known to be attractive for tsetse (Brady, 1972a; Vale, 1974; Torr, 1994). The potential of adding motion illusion cues to 3D visual targets to attract flies was examined by presenting a barber's pole (David, 1982) alone and a barber's pole compared to a control pole (see below) to groups of starved flies activated with human breath in a circular free-flight arena 115 cm diam. and 56 cm high set on the floor of an environmental cabinet at 26°C ± 1.6°C and 65% ± 10% RH.

Objects hereafter with the barber's prefix bear an external spiral pattern and produce an illusion of continuous vertical movement in an orbiting observer. Controls incapable of inducing any motion illusion are hereafter called stationary. The arena was illuminated by the high frequency fluorescent lighting of the environmental cabinet. The upper arena rim bore a wooden ring of 111/125 cm inner/outer diam. that supported stretched black polyester insect netting (Swisstulle 182/21, Münchwilen, Switzerland) to close the top of the arena. The floor and the wall of the arena were covered by matt white blotting paper (Benchguard BG50E, Sigma-Aldrich Chemie GmbH, Buchs, Switzerland, hereafter white blotting paper). The wooden ring also supported a 113 cm diam. ring of Teflon tubing (6 mm inner diam.) carrying 12 arena-pointing 5 mm diam. 1 cm long outlet tubes evenly spaced around the arena perimeter to deliver human breath as an activator for flies (hereafter injector ring). The injector ring was attached to a pump (Barant 400-1902, Barant CO., Barrington, USA) that produced a continuous airflow (1.6 L / min) interrupted only for the 16 second period of breath exhalation into the tube through a mouthpiece. Breath constituents were removed from the arena by continuous suction through tubing at the base of the arena to the exterior. The experimenter, data recorders and pumps were located outside the cabinet.

Poles 49 cm high, 4 cm diam. were made of transparent Plexiglass^{®}, whose top 24 cm section was covered with phthalogen blue cloth (TDV-C180, 100% cotton, TDV Industries, Laval Cedex, France; hereafter phthalogen blue textile). Patterns were formed on the blue poles using strips of matt black textile (Oeko-Tex Standard 100 5200/9; hereafter matt black textile; Gubser Textile AG, CH-8952 Schlieren, Switzerland). Reflective spectra of the textiles were measured using a Datacolor CheckPro spectrophotometer (Fig. 7). Fig. 7 shows reflective spectra of the TDV-C180 phthalogen blue 100% cotton textile (solid line), the Oeko-Tex Standard 100 matt black textile (dotted line) used to cover the visual targets and the black cardboard (dashed line) used inside the blue drum target.

The barber's poles had a continuous 2.5 cm wide strip of matt black textile in a spiral at a slope of 26°. The control pole had four 2.5 cm high rings of matt black textile spaced in parallel at 3.5 cm from one another along the blue pole. The top 1 cm of all poles tested in the arena and wind tunnel (explained further on) were covered with matt black textile. Fly landings on poles were continuously filmed with a Logitech QuickCam Pro 9000 web camera (Logitech International S.A., Romanel-sur-Morges, Switzerland) placed above the centre of the arena. Groups of 1 - 10 *G. pallidipes were* released into the arena 1 hour before experiments. Numbers of landings on the poles were counted from slow-motion replay of video records of fly landings following delivery of breath.

### First series of tests (TEST 1):

Landings by flies on the barber's pole presented alone in the free-flight arena were recorded using 18 groups of 1-10 starved flies. Landings on the pole were counted for 1 minute after delivering human breath and normalised to the number of individuals present in the arena. A linear model (LM) was fitted to the normalised numbers of landings recorded for groups of flies to examine whether it was significantly higher than zero (TEST 1).

### Second series of tests (TEST 2):

The preference by flies to land on a barber's pole versus a control pole without motion illusion was tested using 4 groups of 7-10 starved flies. Groups of flies were exposed to 8 consecutive exhalations at 5-minute intervals; landings on the two poles were counted for 5 minutes after every exhalation. Proportions of landings on the two poles were analysed using a mixed effect generalized linear model (GLM) with a binomial error distribution and applying a logit link function (TEST 2). Positions of the targets were treated as an independent factor type variable. A random factor was added to the model to account for the use of 8 consecutive exhalations to activate a group of flies.

Willingness of flies to land on freely rotating poles was examined by hanging a pair of 24 cm high and 4 cm diam. barber and control poles on 1 mm diam. black round rubber bands in the arena and spinning them up as torsion pendulums before delivering human breath. In these experiments presence of the examiner beside the arena and the motion illusion induced by the spinning barber's pole allowed only a qualitative description of tsetse behaviour.

### Wind tunnel experimental methods

A 2D square target and 11 cylindrical visual target designs (Table 1) were tested in a climatised wind tunnel (26°C temperature, 65% RH and 0.5 m/sec air speed; see Gurba *et al.,* 2012) with a 2 m long flight space and a flight volume of 2 m³ that allowed flies to reach higher cruise speeds than in the arena. Illumination was provided by high frequency fluorescent tubes from above.

The open blue drum target (Table 1) was tested under high frequency fluorescent light and in presence of a UV lamp (type UVL-56, UVP Inc., San Gabriel, USA) substituting for the UV content of natural sunlight. The transparent floor of the tunnel was illuminated by an array of LEDs through a red colour filter (Rosco e-colour 27 medium red filter transmitting light at wavelengths longer than 600 nm). The side walls of the wind tunnel were covered with equispaced 7 cm wide vertical pale blue stripes 7 cm apart to provide the flying insects with an optical flow. The experimenter was not visible from inside the wind tunnel.

**Table 1. Characteristics of the 12 target designs tested in the wind tunnel.**

| **Target** | | | | | **Black stripe** | | |
|---|---|---|---|---|---|---|---|
| **Mark** | **Description** | **diameter** | **height** | **support** | **pattern** | **stripe tilt** | **stripe width** |
| A | 2D blue square | 24 cm | 24 cm | fishing line | none | - | - |
| B | blue-black pole | 4 cm | 24 cm | Plexiglass pole | 6 rings evenly spaced | 0° | 2 cm |
| C | blue-black barber's pole | 4 cm | 24 cm | Plexiglass pole | spiral | 25.5° | 2 cm |
| D | closed blue-black barber's barrel | 11.5 cm | 24 cm | Plexiglass pole | spiral | 9.5° | 2 cm |
| E | closed blue-black cyclic barrel | 11.5 cm | 12 cm | rubber thread | 3 rings evenly spaced | 4° | 2.5 cm |
| F | closed blue-black barber's drum | 24 cm | 12 cm | fishing line | spiral | 9° | 2.5 cm |
| G | open blue-black barber's drum | 24 cm | 12 cm | fishing line | spiral | 9° | 2.5 cm |
| H | closed blue drum | 24 cm | 12 cm | fishing line | none | - | - |
| J1 | open blue drum | 24 cm | 12 cm | fishing line | none | - | - |
| J2 | open blue drum with black cardboard inside | 24 cm | 12 cm | fishing line | none | - | - |
| K | blue drum with polarizer stripe | 24 cm | 12 cm | fishing line | polarizer stripe inside along the lower edge | 0° | 2 cm |
| L | blue drum with polarizer stripe | 24 cm | 12 cm | fishing line | polarizer stipe outside along the lower edge | 0° | 2 cm |

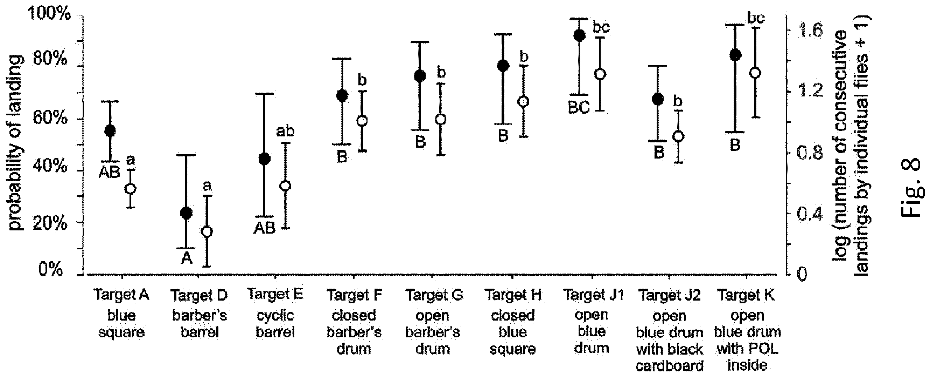

The cylindrical targets differed in diameter, height-to-width ratio and their ability to produce a barber's pole illusion and were supported either on a Plexiglas pole, by a 1 mm diam. black round rubber band from the roof of the wind tunnel or from 0.2 mm diam. transparent fishing line (Table 1). Hereafter the tested visual targets are referred to by the corresponding capital letter in Table 1. Hereunder we use the term 'pole' for cylindrical targets with height-to-width ratios greater than 3, the term 'barrel' for cylindrical targets with height-to-width ratios between 1 and 3, and the term 'drum' for cylindrical targets with height-to-width ratios below 1. All barrel and drum targets were covered with phthalogen blue cloth on the outside and with matt black textile on the inside. Depending on treatment, targets also carried stripes of matt black textile on the outside. Pole, barrel and closed drum targets possessed a flat top of matt black textile, and a matt black textile bottom when suspended. Open drum targets had no cover on either the top or bottom giving flies free access to the inner surface of the cylinder. In addition to stationary and barber's targets, a visual target inducing an illusion of cyclic vertical movement to an orbiting observer (target E, hereafter called 'cyclic' target) was tested. Target J2 covered by phthalogen blue cloth on its outside had shiny black cardboard on its inside (Figs. 7 and 8). Fig. 8 shows the efficacy of 10 visual targets tested in the wind tunnel at inducing *G. pallidipes* to land; black dots mark the probability of starved *G. pallidipes* to land on the targets as predicted by the GLM and open circles mark the log(c+1) transformed average numbers of consecutive landings made by individual flies on the targets as estimated by the LM. Whiskers mark the 95% confidence intervals. Upper- and lower-case letters mark targets with significantly different means in post hoc Tukey multiple comparisons of the GLM- and LM-analysed data sets.

Tests in the wind tunnel were performed during the activity periods of tsetse and fly numbers tested for each target are indicated on Table 2. Flies were put in 13x5 cm cylindrical release cages and allowed to acclimatize to the wind tunnel conditions for a minimum of 15 minutes. One fly at a time was placed at the centre of the downwind end of the wind tunnel 50 cm above the floor. Human breath was introduced for 10 sec into the air stream 60 sec after opening the release cage with a string (Gurba *et al.* 2012). Flight and landings by flies were filmed for 120 sec after stimulus delivery using the iSpy software (iSpyConnect open source project) run on a Dell computer (Dell Inc., Round Rock, Texas, USA) and a pair of Logitech2000 web cameras placed against the side walls 130 cm from the release cage one on either side on the floor for pole and open drum targets. To film flies flying to and landing on closed barrel and drum targets the web camera on the left side (facing upwind) was fixed on the side wall of the wind tunnel just below the ceiling 130 cm from the release cage while the one on the right side was left on the floor against the other side wall. This allowed simultaneous observation of all the inside and outside surfaces of a target without any area being hidden from the cameras. Numbers and positions of landings by individual flies on the targets were recorded in real time from a video screen by the observer and verified from the recorded video sequences. Flies were tested only once. A given fly was considered as responding when it displayed a "setting flight response" where it left the release cage upon delivery of the breath stimulus and flew more than 30 cm upwind towards the test object. Flies staying in the cage, walking or jumping out of the cage without flying, flying onto the downwind wall of the wind tunnel or flying from the release cage before delivery of the breath stimulus were considered as non-responders. Setting flight rate A is the proportion of flies displaying a setting flight response of the total number of flies tested *M* for a treatment. The actual number of flies setting flight *N* to each treatment is presented in Table 2. Landing rate *L* by flies on a treatment was calculated as the proportion of individuals R that landed on any part of a test object out of the *N* individuals displaying a setting flight response. Numbers of consecutive landings c on the target was recorded separately for each fly displaying a setting flight response.

### Third series of tests (TEST 3):

The probability of an individual *G. pallidipes* displaying a setting flight reaction in presence of the blue rectangular target (target A), barrel targets (targets D and E) and drum targets (targets F, G, H, J1, J2 and K) was examined by fitting a generalized linear model (GLM) to *M* and N using a quasibinomial error distribution and logit link function (TEST 3). Target type was considered as a factor type independent variable. Differences between factor level estimates by the model were analysed using ANOVA. Pairwise comparisons of predicted landing probabilities on targets were made by *post hoc* comparisons of predicted means using Tukey contrasts. Poles (targets B and C) that did not induce tsetse to land were not included in this analysis, neither was target L included as too few flies were tested for this treatment to draw any valid conclusions.

### Fourth series of tests (TEST 4):

The probability of landing by individual starved *G. pallidipes* on the blue rectangular target (target A), on barrel targets (targets D and E) and drum targets (targets F, G, H, J1, J2 and K) was compared using a generalized linear model (GLM; TEST 4). The model was fitted to N and R using a quasibinomial error distribution and logit link function. Target types were considered as factor type independent variables. Differences between factor level estimates by the model were analysed using ANOVA. Pairwise comparisons of predicted landing probabilities on targets were made by *post hoc* comparisons of predicted means using Tukey contrasts. The model-predicted probability of landing by individual flies was considered as the measure of the effectiveness of a visual target as a landing stimulus in the wind tunnel (black dots in Fig. 8).

### Fifth series of tests (TESTS 5):

To quantify the ability of the 9 targets cited above under TESTS 3 and 4 to elicit multiple landings, the average numbers of consecutive landings by the N starved flies displaying a setting flight response were analysed by fitting a linear model (LM) to log(c+1) transformed counts of landings (TEST 5). Target types and sex were considered as factor type independent variables. Pairwise comparisons of predicted numbers of consecutive landings (white circles in Fig. 8) on targets were made by *post* hoc comparisons of predicted means using Tukey contrasts.

### Sixth test series (TEST 6):

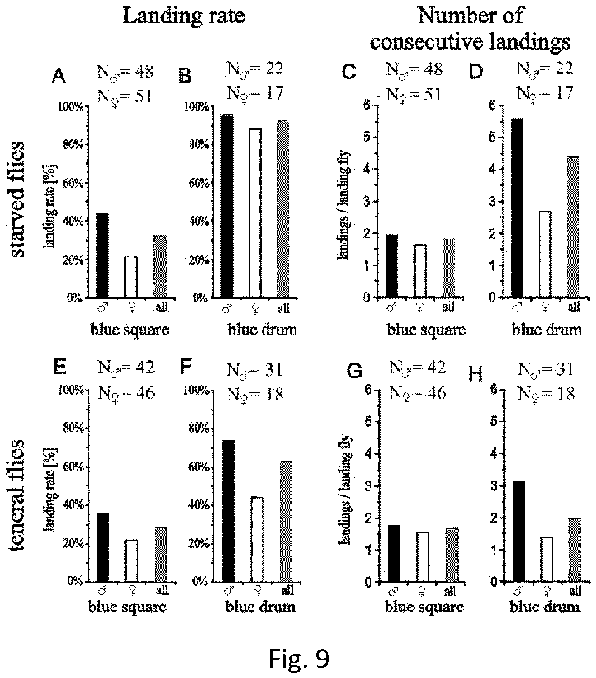

The difference between landing rates of teneral and starved flies on the blue square (target A) and the highly efficient blue drum (target J1) was examined using the Cochran-Mantel-Haenszel test (CMH test; TEST 6). The responses of teneral flies were compared to the responses of a group of starved flies to the blue drum target J1 and phthalogen blue square target A (Table 1 and Fig. 9). Since in TEST 5 no significant effect of sex was detected, proportions of landings per treatment recorded for males and females were treated as independent replicates. All analyses were performed using R (R Development Core Team, 2008).

### Field trial methods for stable flies and tsetse flies

Field trials were made for the stable fly on a dairy farm facility, and in a horse-stable yard and surrounding paddocks in the Jura Mountains western Switzerland during the summer of 2018. Field trials were made on tsetse in a national park in Tanzania in March 2019 where high densities of the savannah tsetse species *Glossina swynnertoni* are found. When field trials were made on private land and facilities the owners gave permission and when made on public land the field trials were made under permit. The aim of the field trials was to establish if a suspended visual target cylindrical in shape and wider than high, of the drum target design tested successfully in the wind tunnel, could serve to attract biting flies to land on it in the field. In all field trials described below, cylindrical targets were deployed in the field with the cylinder's central axis parallel to the local vector of gravitational acceleration (vertical).

A cylindrical target 40 cm in diameter and 25 cm high that was blue on its outer surface (hereunder blue cylindrical target) was confectioned from a sleeve formed by sowing two rectangles of blue and black cloth together along their long sides to form a sleeve. The phthalogen blue cloth was the same as that used to confection devices for tests in the wind tunnel (above) and whose reflectance spectrum is presented in Fig. 7. The black cloth was a 100% matt polyester (225 g/m², Q15093 Sunflag, Nairobi) showing negligible reflectance at wavelengths shorter than 660 nm as measured with the spectrophotometer (above). The blue/black cloth sleeve was pulled over a 1 mm thick plastic panel that served to form the cylinder wall, providing a blue outer surface and black inner surface on the cylinder. The shape of the device was maintained by spacers consisting of 4 timber bars 1 cm in diameter, extending 18.5 cm like spokes of a wheel from a 3 cm diameter central timber hub to which they were glued. Two such spacer arrangements were positioned inside the cylinder, one at the top and the other at the bottom. The spacers and central hub were painted matt black (Dupli-color^{®}, MOTIP DUPLI GmbH, Hassmersheim, Germany). The cylinder was deployed with its lower perimeter parallel to the ground by attaching it through the outside surface with two screws one above the other and 21 cm distant from one another to the top of a timber post placed inside the cylinder (as depicted on Fig. 5). The timber post, painted matt black, was 33 x 33 mm in cross section, 1 m long, with two pre-bored holes 21 cm apart to accommodate the free ends of two of the spacers at the top and bottom of the cylinder inside. The screws were long enough to pass through the cylinder wall at the point where the plastic panel and cloth sleeve cover overlapped, passing successively through the cloth, pre-bored holes in the plastic panel, the inside cloth cover and the post to the ends of the timber spacers to securely attach the device. A smaller cylinder 24 cm in diameter and 14 cm high was also tested and secured to the top a 1 m long post using spacers and attachments points of proportionally smaller dimensions. The bigger and smaller cylinders were tested for the stable fly with their lower perimeters, respectively, at 75 cm and 86 cm from the ground.

The capacity of the blue cylinders to induce stable flies to land on them was tested by covering their outer surface with adhesive film (Rentokil FE45, Liverpool, UK). These fly catches permitted measurement of biting fly landing rates, the critical behavioural response underlying the use of insecticide-impregnated visual control devices for biting flies.

In one field trial for the stable fly, the 40 cm diameter cylindrical target with a blue outer surface had a 35 cm high polyester insect-netting cone (Swisstulle 182/21, Münchwilen, Switzerland) sown to its upper perimeter that served to guide flies that entered the target from below to a 1 liter transparent plastic bottle that trapped flies responding to light arriving at the cone apex. A closed 40 cm diameter cylindrical target with a blue outer surface was tested for the stable fly by attaching either matt blue or matt black plastic disks 40 cm in diameter, 4 mm thick, to the top and bottom cylinder perimeter and comparing it to the open blue cylindrical target. The spectral reflectance of the blue and black disks was the same as that of the corresponding phthalogen blue and black fabrics. A 40 cm diameter cylindrical target with a black outer surface was tested in another field trial for the stable fly by placing the cloth sleeve with the black cloth outside and blue cloth inside the cylinder. All these cylindrical devices were compared to the open-ended 40 cm diameter cylindrical target with a blue outer surface.

Responses of the stable fly to a 40 cm diameter cylinder with a blue outer surface was compared with a cylindrical fiberglass (Alsynite) stable fly trap 20 cm in diameter 30 cm high that is retailed with its own sticky sleeve (Olson Products Inc., Medina, Ohio, USA), and with a 2D, 28 cm square 5 mm thick, polyoxymethylene (POM) panel with a 5 cm diameter central hole and covered with insect glue (Tanglefoot Company, Grand Rapids, Michigan, USA). This white panel trap is documented to catch twice as many stable flies as the fiberglass cylindrical stable fly trap (Zhu *et al.* 2016). Both the fiberglass cylinder trap and the 2D white target were set up with their lower edge at 75 cm from the ground.

Response of the savannah tsetse fly *G. swynnertoni* to 40 cm and 25 cm diameter cylinders with a blue outer surface were compared with a pyramidal trap made of 2 blue and 2 black pieces of cloth hanging alternately at right angles to one another (total surface area of cloth 2m²) topped by a fly collecting cone of insect-netting and a trap, and with a 2D phthalogen blue cloth target (70 cm x 43 cm) with its long end parallel to the ground. This 2D phthalogen blue target is the optimum design for G. *swyrrentoni.* Cloth pieces used in the confection of both the pyramidal trap and the 2D cloth target were the same as used for the cylindrical targets. Both the inside and outside of the cylinders were covered with adhesive film (Rentokil FE45, Liverpool, UK) to enumerate tsetse landing on the devices and they were tested with their lower perimeters at 60 cm from the ground. The pyramidal trap and 2D blue cloth target were set up with their lower edge at 30 cm from the ground as recommended for savannah tsetse species.

These indicative field trials, carried out over a single season, were made using a Latin Square design where each treatment occupied each trapping station once within an experiment. Distances between treatments (trapping stations) varied between 10 m and 80 m for the stable fly (details for each trial are provided in the corresponding table under Results of field trials) and the distance between treatments was 100 m in the tsetse fly trials. Fly numbers presented in the tables are daily counts. Devices were set up shortly after sunrise on day 1 of a trial and flies were counted each following morning shortly after sunrise. Replicates for the stable fly were made on successive days. Three replicates of treatments tested on tsetse flies were made each day in an experiment that ran for six days and replicates were set up at between 1 and 1.5 km distant from one another.

### Results of free-flight arena experiments

Flies were attracted to both the barber's pole and to the control pole in the free flight arena. Flies set flight upon stimulation with breath and approached the targets typically following a spiral path. Number of landings per individual fly on the barber's pole presented alone ranged between 0 and 4.7 in the 18 groups of flies and was significantly different from zero (LM, Intercept estimate: 1.53, std. error 0.431, t-value 3.544, p = 0.003; Test 1). When tested as a pair, the probability of landing either on the barber's pole or on the control pole estimated by the mixed effect GLM was not significantly different from 50% but showed a slight bias towards the control pole (average no. of landings per individual 1.1 compared to 0.99 on the barber's pole following delivery of 32 breath stimuli to 4 groups of flies; Test 2). The position of the poles had no significant effect on the predicted preference of flies (ANOVA; Df 1, Sum Sq 1.931, Mean Sq 1.9309, F value 1.9309, p ~ 1). Flies were willing to land on pairs of rotating barber's and control poles, performing up to 5.2 landings per individual and displayed an optomotor reaction, compensating for the rotation of the pole by walking on its surface.

### Results of wind tunnel experiments

The number of tsetse setting flight was very poor when poles of 4 cm diam. were presented in the wind tunnel but increased significantly with increasing target diameter (Table 2, analysis of deviance tables: df 8, deviance 29.215, df. resid. 9, resid. deviance 5.109, p < 0.001; Test 3). No systematic trend was recorded in setting flight rates of tsetse presented with cylindrical devices wider than 11.5 cm (Tables 1 and 2). The barrel targets and the open and closed drum targets induced high setting flight rates but without any of them being significantly different from the others.

In the wind tunnel tsetse landed only on the blue square cloth target and on the barrel and drum targets, but not on the pole targets. The landing rate on the open barber's drum (target G) was over double that on the barber's barrel target (target D, Table 2). This indicated that increasing the diameter and horizontal aspect of the cylindrical visual target could positively influence its effectiveness. Adding illusory continuous movement with the cyclic pattern (target E) as a component was not beneficial in the wind tunnel. The landing rate (69.0%) on the 24 cm diam. closed barber's drum (target F) was almost triple that recorded (25%) on the 11.5 cm diam. barber's barrel (target D) which was two times taller than the former (Tables 1 and 2). The landing rate on the open blue drum target (target J1) not inducing motion illusion was significantly higher that on the closed barber's barrel (target D) but not significantly higher than on the closed cyclic barrel (target E) of the same diameter but with half the height of the closed barrel D (Tables 1 and 2, and Fig. 8). Landing rates were in fact not different between any of the drum targets all with a wider than high visual outline, or between the drum targets and the cyclic barrel target (target E) which had almost equal horizontal and vertical visual aspects (Tables 2 and 3, and Fig. 8).

**Table 2. Combined data on the flight activity and landing rates of teneral and starved G. pallidipes on the square 2D and 3D cylindrical target designs. Data includes the teneral flies' responses to targets A, J1 and J2. Within columns, different lower case or capital letters indicate targets inducing significantly different flight setting rates, fly landing rates and numbers of landings per fly in post hoc Tukey multiple comparisons of the GLM-and LManalyzed data sets. Superscripts BC and be indicate that targets J1 and K where significantly different to at least one treatment with superscripts AB or ab. The open blue drum with a polarizer stripe on its outside (target L) was not included in the overall analysis due to the low number of flies tested for this treatment.**

| **Target** | | **No. of tested flies *M*** | **No. of flies setting flight *N*** | **No. of flies landing *R*** | **Setting flight rate *A*** | **Fly landing rate *L*** | **Mean no. of landings / fly** |
|---|---|---|---|---|---|---|---|
| **Code** | **Description** | | | | | | |
| A | 2D blue square | 250 | 227 | 87 | 63.5% ^{a} * | 38.3% ^{AB} | 1.43 ^{a} |
| B | blue-black pole | 59 | 14 | 0 | 23.7% | 0.0% | 0 |
| C | blue-black barber's pole | 22 | 2 | 0 | 9.1% | 0.0% | 0 |
| D | closed blue-black barber's barrel | 59 | 40 | 10 | 67.8% ^{ab} | 25.0% ^{A} | 0.57 ^{a} |
| E | closed blue-black cyclic barrel | 40 | 30 | 13 | 75.0% ^{a} | 43.3% ^{AB} | 1.28 ^{ab} |
| F | closed blue-black barber's drum | 106 | 58 | 40 | 54.7% ^{a} | 69.0% ^{B} | 2.76 ^{b} |
| G | open blue-black barber's drum | 72 | 59 | 39 | 79.2% ^{ab} | 66.1 % ^{B} | 2.78 ^{b} |
| H | closed blue drum | 76 | 41 | 33 | 53.9% ^{a} | 80.5% ^{B} | 3.07 ^{b} |
| J1 | open blue drum with matt black textile inside | 57 | 39 | 36 | 68.4% ^{ab} | 92.3% ^{BC} | 2.49 ^{bc} |
| J2 | open blue drum with black cardboard inside | 116 | 77 | 52 | 66.4% ^{ab} | 67.5% ^{B} | 2.21 ^{b} |
| K | open blue drum with polarizer stripe inside | 47 | 26 | 22 | 55.3% ^{a} | 84.6% ^{B} | 4.27 ^{bc} |
| L | open blue drum with polarizer stripe outside | 22 | 13 | 12 | 59.1% | 92.3% | 4.5 |

| | | | | | | | |
|---|---|---|---|---|---|---|---|
| **Data from a subset of 63 starved flies of the total 250 flies accounted for.* | | | | | | | |

**Table 3. Levels of significance provided by post hoc comparison of the probability of landing by G. pallidipes as predicted by the GLM model on a square 2D target and 8 cylindrical visual targets using Tukey contrasts (Test 4). Significant differences are in bold. Marginally significant differences are in italic.**

| | Target A | Target D | Target E | Target F | Target G | Target H | Target J1 | Target J2 |
|---|---|---|---|---|---|---|---|---|
| Target D | *0.090* | | | | | | | |
| Target E | 0.994 | 0.829 | | | | | | |
| Target F | 0.862 | ***0.011*** | *0.673* | | | | | |
| Target G | 0.454 | ***0.003*** | *0.334* | 0.998 | | | | |
| Target H | 0.308 | ***0.002*** | 0.222 | 0.977 | 1.000 | | | |
| Target J1 | *0.058* | ***< 0.001*** | ***0.038*** | 0.444 | 0.812 | 0.943 | | |
| Target J2 | 0.870 | ***0.009*** | 0.693 | 1.000 | 0.992 | 0.945 | 0.354 | |
| Target K | 0.403 | ***0.007*** | 0.260 | 0.945 | 0.999 | 1.000 | 0.996 | 0.905 |

The general pattern for flies landing on the targets was to approach either from below or at the level of the target. Flies flying at the level of the rectangular target tended to orbit it and land on the surface or leave. Flies approaching the drum targets had the tendency to fly below the level of the target. Flies made 2.76 consecutive landings on average on the closed barber's drum (target F) and most of these landings were made on its black underside (58.5%) and on the lower third of the blue outside (18.2%) with only 5.7% of landings on its black top. Despite the overall increased landings on closed drums compared to closed barrels, we considered closed drums more complicated in structure for practical application and accordingly concentrated on simpler open drum structures that showed comparable fly-landing rates. Flies approaching the open blue drum targets (J1 and J2) preferred to land on the lower outside third (56.8% of landings), perch on its lower rim (21.1%), or fly into the drum to land on its inside (20%). Many of the latter flies explored the inside surface of the drum by flying to opposing sides of it before leaving. Flies approaching any tested visual target at a flight level higher than the level of the target seldom landed on it.

**Table 4. Post hoc comparison of the estimated numbers of consecutive landings (Test 5) made by individual G. pallidipes on a square 2D target and 8 cylindrical visual targets using Tukey contrasts.**

| | Target A | Target D | Target E | Target F | Target G | Target H | Target J1 | Target J2 |
|---|---|---|---|---|---|---|---|---|
| Target D | 0.480 | | | | | | | |
| Target E | 1.000 | 0.772 | | | | | | |
| Target F | **0.006** | **< 0.001** | 0.256 | | | | | |
| Target G | **0.020** | **< 0.001** | 0.314 | 1.000 | | | | |
| Target H | **< 0.001** | **< 0.001** | *0.069* | 0.995 | 0.999 | | | |
| Target J1 | **< 0.001** | **< 0.001** | **0.003** | 0.563 | 0.712 | 0.980 | | |
| Target J2 | **0.036** | **< 0.001** | 0.567 | 0.998 | 0.997 | 0.811 | 0.135 | |
| Target K | **< 0.001** | **< 0.001** | **0.012** | 0.690 | 0.791 | 0.986 | 1.000 | 0.266 |

Analysis of the probability of landing on an object (GLM) and number of consecutive landings on it (LM) provided coherent conclusions for the visual targets tested in the wind tunnel. The probability of an individual starved *G. pallidipes* to land successively on an object was significantly lower on the blue square (target A) and on the 24 cm high barber's barrel target (target D) than on any type of drum target included in the analysis (Test 4; Tables 2 and 4, and Fig. 8). Landing rates by starved and teneral flies were not significantly different on the blue square (Target A; CMH test, X² 0.165, p = 0.684), but starved flies landed in significantly higher numbers than teneral flies on the blue drum (Target J1; CMH test, X² 9.487, p = 0.002).

The sex of a fly had no influence on its propensity to make consecutive landings c on the 10 visual targets as examined by the LM (Test 5; targets A, D, E, F, G, J1, J2, K; Df 1, sum square 0.970, mean square 0.9697, F value 1.697, p = 0.193). Numbers of consecutive landings were not significantly different on the blue square and on the barber's barrel target (targets A and D, on average, 1.43 and 0.57 consecutive landings, respectively) but were significantly higher (2.21 or higher) on all drum targets (Table 4). This underlines the pertinence of target diameter. Comparisons between the drum targets revealed no significant differences (Test 5).

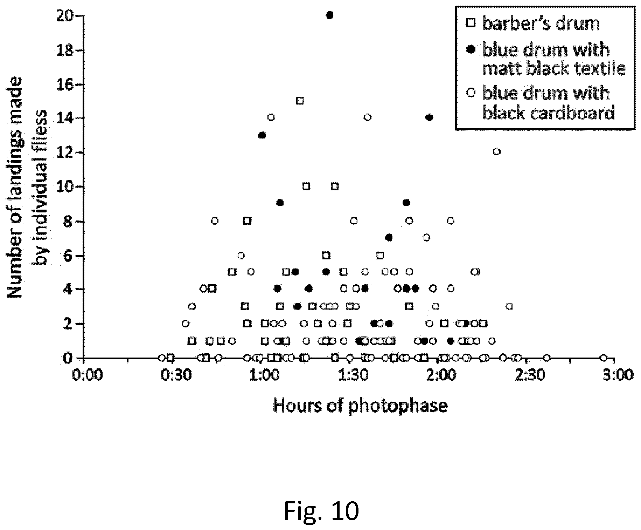

The blue drum with the matt black inside wall (target J1) induced the highest landing rate in targets without polarizers added (Fig. 8). Responding starved individual tsetse made on average 2.49 consecutive landings on the blue drum target J1 and a maximum of up to 20 consecutive landings were made in the period of highest tsetse activity compared to an average of 1.43 per individual fly on the 2D blue square target (target A) with a maximum of 6 consecutive landings during the period of highest activity (Figs. 9 and 10). Figure 9 shows the efficacy of the blue cotton square (target A) and blue drum (target J1) at inducing flies to land on them expressed as a proportions of starved (A - D) and teneral (E - H) *G. pallidipes* that flew to the visual targets, and the numbers of consecutive landings made by these flies on visual targets in the wind tunnel (for details of target types see Table 1). The blue drum target was more efficient regardless of tsetse nutritional state.

The average number of consecutive landings made by a fly at 2.21 was lower on the open blue drum lined with shiny cardboard inside (target J2) than on the open blue drum with matt black textile inside at 2.49 (target J2; Tables 1 and 2), although the probability of consecutive landings on all blue drum targets was not significantly different (Tables 2 and 4, and Fig. 8). The number of consecutive landings on the open barber's drum target (target G) was on average 2.78, only slightly higher than on the two open blue drum targets J1 and J2. Neither this non-significant increase, the number of consecutive landings at 2.76 recorded on the closed barber's drum target (target F), nor the 3.07 consecutive landings per fly recorded on the closed blue drum target (target H), was high enough to justify developing such complex structures. Tsetse propensity to land and make successive landings was among the highest on the blue drum targets bearing a polarizer, either inside for target K and outside for target L, indicating a probable advantage of adding polarizer stripes to drum targets but with the disadvantage of increased production costs (Table 2).

The above analyses indicate that probability of landing by a fly on a test object was highly predictive of the probability of making a subsequent landing on the same object. Timing of tests in the wind tunnel relative to the start of the photophase was not predictive of whether a given fly would land or not but was predictive of the number of consecutive landings made by a fly (Fig. 10). Fig. 10 shows the numbers of landings performed by individual *G. pallidipes* on 3 open drum targets during tests performed within the first 3 hours of the photophase. See detailed visual target descriptions in the text and Table 1. Highest numbers of consecutive landings were recorded 60-80 minutes after onset of the photophase, the period when tsetse display maximal spontaneous activity (Brady 1972b).

### Results of field trials on the stable fly, Stomoxys calcitrans, with the blue cylindrical target

### Performance of the blue cylindrical target compared to existing stable fly devices

Landings by the stable fly on the fiberglass sticky trap were 0.7% of the number that landed on the blue cylindrical target in trial 1 (devices 10 m apart), and 3% in trial 2 (devices 35 m apart; Table 5). Over the two field trials, 0.44 flies/cm² were recorded landing on the blue cylindrical target compared to 0.013 flies/cm² on the cylindrical fiberglass trap.

**Table 5. Stable fly, Stomoxys calcitrans, landings on a cylindrical target with a blue outer surface and covered with sticky film compared to landings on a fiberglass cylindrical trap covered with its own sticky sleeve*. Field trial 1 made August 3-6, 2018, field trial 2 made August 12-15, 2018.**

| Day | **Blue cylindrical target**** | **Fiberglass cylindrical trap***** |
|---|---|---|
| | 40 cm in diameter | 20 cm in diameter |
| | 25 cm high | 30 cm high |
| | *Field trial 1: devices 10 m apart near dairy cattle but placed just outside the 150-animal facility* | |
| 1 | 298 | 3 |
| 2 | 322 | 2 |
| 3 | 131 | 0 |
| | *Field trial 2: devices 35 m apart in horse-stable yard* | |
| 1 | 203 | 14 |
| 2 | 183 | 4 |
| 3 | 244 | 1 |
| **Total** | **1381** | **24** |

| | | |
|---|---|---|
| * Devices set up shortly after sunrise on day 1, flies counted each following morning shortly after sunrise. Data from fully randomized Latin Square design experiments, i.e. each treatment occupied all stations once within an experiment (a third treatment was included in experiments 1 and 2 for purposes of target optimization, data not shown). Experiment 2 was made with freshly-produced sticky sleeves for the fiberglass trap delivered from Olson Products Inc., Medina, Ohio, USA. ** Sticky surface area of blue cylindrical target is 3142 cm² with 0.44 fly landings/cm². *** Sticky surface area of fiberglass cylindrical trap is 1885 cm² with 0.013 fly landings/cm². | | |

Landings by the stable fly on the white panel target were 5.8% of the number that landed on the blue cylindrical target, to provide a landing rate of 0.03 flies/cm² on the white panel compared to 0.27 flies/cm² on the blue cylindrical target (Table 6). The number of landings by the stable fly on both the fiberglass cylindrical trap and white panel target was disproportionally low compared to the surface area of their adhesive fly-landing surfaces (Tables 5 and 6).

**Table 6. Stable fly, Stomoxys calcitrans, landings on a cylindrical target with a blue outer surface and covered with sticky film * compared to landings on a 2D white panel trap ** covered with insect glue. Field trial made September 5^{th}-7^{th}, 2018**

| **Day** | **Blue 3D target***** | **White 2D panel target****** |
|---|---|---|
| | *Field trial with devices 35 m apart in horse-stable yard* | |
| 1 | 485 | 44 |
| 2 | 354 | 5 |
| **Total** | **839** | **49** |

| | | |
|---|---|---|
| * Devices set up shortly after sunrise on day 1, flies counted each following morning shortly after sunrise. Data from a fully randomized Latin Square design experiment, i.e. each treatment occupied all stations once within the experiment. **Zhu et al. 2016, Pest Management Science 72:1765-177, found that white panel traps (28 cm square panel with 5 cm diameter central hole) caught twice as many stable flies as fiberglass cylindrical traps in Nebraska, USA. ***Sticky surface area of 3D blue target is 3142 cm² with 0.27 fly landings/cm². **** Sticky surface area of 2D white panel target is 1568 cm² (two faces) with 0.03 fly landings/cm². | | |

### Effect of size and colour of the blue cylindrical target on stable fly landings

Reducing the blue cylindrical target size from 40 in diameter x 25 cm high to 25 cm in diameter x 14 cm high, or a reduction of 65% in surface area, caused the smaller blue target to induce disproportionally fewer stable flies to land on it at 0.07 fly/cm² compared to 0.24/cm² on the bigger blue one (Table 7).

**Table 7. Stable fly, Stomoxys calcitrans, landings on cylindrical targets with outside blue surfaces of different sizes in a horse-stable yard, both covered with sticky film on the outer surface*. Field trial made August 19-22, 2018.**

| **Day** | **Blue cylindrical target**** | **Small blue cylindrical target***** |
|---|---|---|
| | 40 cm in diameter | 25 cm in diameter |
| | 25 cm high | 14 cm. high |
| | *Field trial with devices 35 m apart in a horse-stable yard* | |
| 1 | 204 | 21 |
| 2 | 196 | 26 |
| 3 | 341 | 24 |
| **Total** | **741** | **71** |

| | | |
|---|---|---|
| * Devices set up shortly after sunrise on day 1, flies counted each following morning shortly after sunrise. Data from fully a randomized Latin Square design field trial, i.e. each treatment occupied all stations once within the trial (a third treatment was included in the experiment for purposes of target optimization, data not shown). ** Sticky surface area of blue cylindrical target is 3142 cm² with 0.24 fly landings/cm². *** Sticky surface area of small blue cylindrical target is 1100 cm² with 0.07 fly landings/cm². | | |

Changing the outer surface of the cylindrical target from blue to black had no influence on stable fly landings: 0.45 fly landing/cm² on the blue target was practically the same as the landing rate of 0.46 fly landings/cm² the black target (Table 8).

**Table 8. Stable fly, Stomoxys calcitrans, landings on cylindrical targets of the same size but with blue and black outer surfaces. Both targets were covered with sticky film * on the outer surface **. Field trials made October 16-22, 2018.**

| **Day** | **Blue cylindrical target***** | **Black cylindrical target***** |
|---|---|---|
| | 40 cm in diameter | 40 cm in diameter |
| | 25 cm high | 25 cm high |
| | *Field trials with devices 80 m apart in horse paddocks* | |
| 1 | 49 | 49 |
| 2 | 66 | 22 |
| 3 | 677 | 611 |
| 4 | 316 | 444 |
| 5 | 159 | 259 |
| 6 | 142 | 68 |
| **Total** | **1409** | **1453** |

| | | |
|---|---|---|
| * Devices set up shortly after sunrise on day 1, flies counted each following morning shortly after sunrise. Data from fully randomized Latin Square design field trials, i.e. each treatment occupied a station once within a trial. ** Sticky surface area of the cylindrical blue and black targets is 3142 cm² with 0.45 fly landings/cm² on the blue target and 0.46 fly landings/cm² on the black target. *** The inside surface of the blue cylindrical target was black, and the inside surface of the black cylindrical target was blue. | | |

### Effect of open and closed blue cylindrical targets on stably fly landings indoors

The blue cylindrical target open at its top and underside induced stable flies to land on its adhesive surface at a rate of 0.27 flies/cm² within a 150 dairy-cow facility. In the same trial, a blue cylindrical target closed at its top and underside perimeters with 40 cm diameter blue disks, induced 46% more flies to land on its adhesive surface (Table 9). However, when one takes into account the 80% increase in surface area of the closed target, the 46% increase in number of stable flies landing at 0.20 flies/cm² is lower than would be expected.

**Table 9. Stable fly, Stomoxys calcitrans, landings on two cylindrical targets with outside blue surfaces inside a dairy-cow facility*. The open cylindrical target was open at its top and underside and had sticky film on its outer surface; the closed cylindrical target was closed at its top and underside perimeters with blue disks and was covered on its outside surface, top and underside with sticky film. Field trial made September 4-6, 2018.**

| **Day** | **Blue cylindrical open target**** | **Blue cylindrical closed target** |
|---|---|---|
| | 40 cm in diameter | 40 cm in diameter |
| | 25 cm high | 25 cm high closed in blue at top and underside*** |
| | *Field trial with devices 35 m apart inside a 150 dairy-cow facility* | |
| 1 | 314 | 554 (24 on top, 2 on underside) |
| 2 | 469 | 590 (77 on top, 3 on underside) |
| **Total** | **783** | **1144** |

| | | |
|---|---|---|
| * Devices set up shortly after sunrise on day 1, flies counted each following morning shortly after sunrise. Data from a fully randomized Latin Square design field trial, i.e. each treatment occupied all stations once within the trial. ** Sticky surface area of blue cylindrical target is 3142 cm² with 0.25 fly landings/cm². *** Sticky surface area of blue cylindrical target closed with blue disks at its top and underside perimeters is 5655 cm² with 0.20 fly landings/cm². | | |

### Effect of open and closed blue cylindrical targets on stably fly landings outdoors

In this field trial the blue cylindrical target open at its top and underside induced stable flies to land on its adhesive surface at a rate of 0.14 flies/cm² in a horse-stable yard (Table 10). In the same trial, a blue cylindrical target closed at its top and underside perimeters with 40 cm diameter blue disks, induced 120% more flies to land on its adhesive surface at a rate of 0.17 flies/cm² (Table 10). However, this rate of increase in landing rate could not be repeated in a subsequent field trial with the same devices (Table 11). A second blue cylindrical target closed at its top and underside perimeters with black 40 cm diameter disks induced only marginally (14.6%) more flies to land on its adhesive surface (Table 10). This increase is lower than would be expected for the 80% increase in surface area (0.09 flies/cm² compared to 0.14 flies/cm² on the open cylindrical target).

**Table 10. Stable fly, Stomoxys calcitrans, landings outdoors in a horse-stable yard on three cylindrical targets with outer surfaces in blue and top and bottom surfaces in blue or black*. The open cylindrical blue target was open at its top and underside and had sticky film on its outer wall; a closed cylindrical blue target was closed at its top and underside perimeters with blue disks and was covered on its outside surface, top and underside with sticky film; a second closed cylindrical blue target was closed at its top and underside perimeters with black disks and was covered on its outside surface, top and underside with sticky film. Field trial made on August 22^{nd}-25^{th}, 2018.**

| **Day** | **Blue cylindrical open target**** | **Blue cylindrical closed target** | **Blue cylindrical closed target** |
|---|---|---|---|
| | 40 cm in diameter | 40 cm in diameter | 40 cm in diameter |
| | 25 cm high | 25 cm high closed in blue at top and underside*** | 25 cm high closed in black at top and underside**** |
| | *Field trial with devices 35 m apart in horse-stable yard* | | |
| 1 | 214 | 435 (16 top, 55 under) | 281 (12 top, 19 under) |
| 2 | 77 | 173 (2 top, 25 under) | 55 (6 top, 8 under) |
| 3 | 138 | 377 (4 top, 4 underside) | 156 (6 top, 31 under) |
| **Total** | **429** | **985** | **492** |

| | | | |
|---|---|---|---|
| * Devices set up shortly after sunrise on day 1, flies counted each following morning shortly after sunrise. Data from a fully randomized Latin Square design field trial, i.e. each treatment occupied all stations once within the trial. ** Sticky surface area of blue cylindrical target is 3142 cm² with 0.14 fly landings/cm². *** Sticky surface area of blue cylindrical target closed with a blue disk at its top and underside perimeters is 5655 cm² with 0.17 fly landings/cm². **** Sticky surface area of blue cylindrical target closed with a black disk at its top and underside perimeters is 5655 cm² with 0.09 fly landings/cm². | | | |

### Performance of a blue cylindrical target topped with an insect-netting cone and fly trap

In this field trial a blue cylindrical target with no sticky film on its outer surface was topped with an insect-netting cone that served to guide flies entering the target from below to a bottle that trapped them at the cone apex. The device only caught 8 stable flies over the course of the 3-day trial in a fully randomized block design where the blue cylindrical target induced 592 stable flies to land on its surface over the same 3-day period (Table 11). This indicates that practically no stable flies entered the blue cylindrical target from below. The finding was corroborated, since no stable flies were seen to rest on the inside black surface of the blue cylindrical target over the course of the numerous field experiments made with it during the summer of 2018.

**Table 11. Stable fly, Stomoxys calcitrans, landings on two cylindrical targets with outside blue surfaces and catches in a blue cylindrical target modified as a trap outdoors in a horse-stable yard*. The open cylindrical target was open at its top and underside and had sticky film on its outer wall; the closed cylindrical target was closed at its top and underside perimeters with blue disks and was covered on its outside surface, top and underside with sticky film; the third cylindrical target had no sticky film but was topped with an insect-netting cone that served to guide flies entering the target from below to a bottle that trapped them. Field trial made on September 11-14, 2018.**

| **Day** | **Blue cylindrical open target**** | **Blue cylindrical closed target** | **Blue cylindrical target** |
|---|---|---|---|
| | 40 cm in diameter | 40 cm in diameter | 40 cm in diameter |
| | 25 cm high | 25 cm high closed in blue at top and underside*** | 25 cm high topped by a netting cone and fly trap**** |
| | *Field trial with devices 35 m apart in horse-stable yard* | | |
| 1 | 256 | 249 (6 top, 2 underside) | 3 |
| 2 | 53 | 196 (6 top, 2 underside) | 3 |
| 3 | 283 | 165 (4 top, 4 underside) | 2 |
| **Total** | **592** | **610** | **8** |

| | | | |
|---|---|---|---|
| * Devices set up shortly after sunrise on day 1, flies counted each following morning shortly after sunrise. Data from a fully randomized Latin Square design field trial, i.e. each treatment occupied all stations once within the trial. ** Sticky surface area of blue cylindrical target is 3142 cm² with 0.19 fly landings/cm². *** Sticky surface area of blue cylindrical closed target is 5655 cm² with 0.11 fly landings/cm² **** The target had a netting cone 35 cm high sown to its upper perimeter that served to guide flies that entered the target from below to a bottle that trapped flies arriving at the cone apex. | | | |

### Results of a field trial on the tsetse fly, Glossina swynnertoni, with blue cylindrical targets

### Performance of the blue cylindrical target compared to existing tsetse-control devices

The efficiency of the pyramidal trap at capturing the savannah tsetse species *G. swynnertoni,* i.e. the proportion of flies caught in the trap cage of those flies that approach the trap at close range, is estimated at 30%. The pyramidal trap in fact captured *G. swynnertoni* at approximately that proportion compared to the 2D rectangular target of optimum dimensions for *G*. *swynnertoni* (Table 12).

Landings by *G. swynnertoni* on the 40 cm in diameter x 25 cm high blue cylindrical target were 57% of the number that landed on the 2D rectangular target which had twice the surface area of the cylindrical target (Table 12). With a landing rate of 0.27 flies/cm² on the blue cylindrical target compared to 0.25 flies/cm² on the 2D rectangular target, the cylindrical target induced slightly more flies to land on it per unit surface area.

**Table 12. Catches in the pyramidal trap and landings by the savannah tsetse species Glossina swynnertoni on a 2D rectangular blue target and on cylindrical targets with outside blue surfaces of different sizes in a Tanzanian national park. The 2D target and blue cylinders were covered with sticky film on the outer surface*. Field trial made March 19-25, 2019.**

| **Day** | **Pyramidal trap** (daily repetitions 1,2,3) | **2D blue rectangular target,** 70 cm x 43 cm** (daily repetitions 1,2,3) | **Blue cylindrical target,** 40 cm in diameter, 25 cm high*** (daily repetitions 1,2,3) | **Small blue cylindrical target,** 25 cm in diameter, 14 cm high**** (daily repetitions 1,2,3) |
|---|---|---|---|---|
| 1 | 60, 3, 39 | 5, 112, 45 | 0, 52, 21 | 12, 20, 10 |
| 2 | 22, 0, 18 | 4, 77, 54 | 61, 40, 67 | 0, 8, 7 |
| 3 | 8, 14, 19 | 147, 68, 78 | 21, 56, 103 | 3, 10, 2 |
| 4 | 29, 16, 65 | 345, 80, 295 | 65, 64, 64 | 4, 18, 1 |
| 5 | 0, 8, 11 | 19, 21, 22 | 11, 68, 61 | 1, 9, 10 |
| 6 | 32, 24, 47 | 46, 38, 54 | 28, 37, 43 | 4, 2, 14 |
| **Total** | **415** | **1'510** | **862** | **135** |

| | | | | |
|---|---|---|---|---|
| *Devices set up shortly on day 1, flies counted each following forenoon. Data from a fully randomized Latin Square design field trial with three replicates, i.e. each treatment occupied all stations once within a replicate. **Sticky surface area of the 2D rectangular target is 3020 cm² x 2 faces = 6040 cm² with 1'510 flies or 0.25 fly landings/cm². ***Sticky surface area of the 40 cm diameter blue cylindrical target is 3142 cm² with 862 flies or 0.27 fly landings /cm². The inner surface of the 40 cm diameter blue cylindrical targets was also covered with sticky film but induced only 12 tsetse to land on it over the six-day experiment. ****Sticky surface area of the smaller 25 cm diameter blue cylindrical target is 1100 cm² with 135 flies or 0.12 fly landings/cm². The inner surface of these 25 cm diameter blue cylindrical targets was covered with sticky film but induced only 1 tsetse fly to land on it over the six-day experiment. | | | | |

### Effect of size of the blue cylindrical target on tsetse fly landings

Reducing the cylindrical target size from 40 cm in diameter x 25 cm high to 25 cm in diameter x 14 cm high, or a reduction of 65% in surface area, caused the smaller blue cylindrical target to induce fewer *G*. *swynnertoni* to land on it at 0.12 flies/cm² compared to 0.25/cm² on the bigger blue one (Table 12). The inner surface of these cylindrical targets was also covered with sticky film. Over the six-day experiment, only 12 tsetse were found to land on the inner surface of bigger cylindrical targets and 1 fly on the inner surface of the smaller cylindrical targets.

### Conclusions from the experimental results

Visual targets currently widely used for the control of savannah tsetse species like *G. pallidipes* provide satisfying results, but the required high target density and vulnerability of cloth targets limits their application (Lindh *et al.,* 2009). Any development resulting in an increased number of killed flies per unit target area are welcome. Since very small targets with an area as small as 0.06 m² are very efficient to lure *G. fuscipes* and *G. tachinoides* to land on them, the use of targets bigger than 1 m² for control of riverine species is not justified (Lindh *et al.,* 2009; Esterhuizen *et al.,* 2011; Oloo *et al.,* 2014). In the case of savannah tsetse like *G. pallidipes* and *G. morsitans morsitans,* target sizes from 0.25 to 2 m² are required even though the rate of alighting is lower than 30% (Vale, 1993; Lindh *et al.,* 2009). Such a size makes the targets vulnerable to weather and theft. Similar arguments apply to devices for controlling stable flies and other biting flies.

An open cylindrical target structure of the invention offers, besides its surprising efficiency, several practical advantages that aid in field deployment. This simple shape is mechanically stable and self-sustaining when made of rigid materials. The target can be suspended from a single point of a tree branch or any improvised suspension device, or alternatively can be fixed to the top of a standing pole (see Fig 5).

Large round objects like the biconical trap were successfully used in earlier studies to attract and force tsetse to land. The low propensity (less than 7%) of tsetse to enter the biconical trap without first landing indicates that in fact it performs better as an insecticide-impregnated fly-killing device but without the advantage of a simple structure (Lindh *et al.,* 2009; Oolo *et al.,* 2014). Cylindrical black targets, designed to look like small host animals, suspended with their axes of symmetry placed horizontal with respect to the ground with a surface of 0.66 m² could practically not induce landing by *G. pallidipes* (Hargrove, 1980). We propose that similarity between a 3D visual target and the visual outline of a host animal is irrelevant, but that the attractive visual cues should be continuously visible to the approaching fly regardless of the fly's position in space relative to the target. We have found that a wider-than-high black-and-blue cylindrical object positioned with a vertical axis of symmetry fulfils this requirement and can thus serve as an efficient target for the tsetse fly species *G. pallidipes* and *G*. *swynnertoni* despite the fact that its surface area is less than half that of the smallest target tested by Hargrove (1980).

Pole targets induced landings in the free flight arena, but when tested in the wind tunnel, only less than 1 in 4 flies undertook directed flight to such targets and no flies landed on them. What prevented a fly from leaving the release cage following stimulation with human breath in the wind tunnel could not be reliably identified. However, the high proportion of inactive flies in presence of the pole targets suggests that poles did not provide an adequate activating visual stimulus to induce flies to fly from the release cage, whereas in the free flight arena flies were confronted directly with the visual targets. The horizontal aspect of pole targets was visible under an angle of about 1.8° from the release cage in the wind tunnel, within the range of the 1.2° angle of view of a single ommatidium of the fly's compound eye (Hardie *et al.,* 1989). No reaction was in fact recorded to objects with diameters lower than 11.5 cm, visible under an angle of about 5.5° to the fly. This suggests that *G. pallidipes* reacts to a visual target only if its horizontal extent covers the visual field of at least 4 neighbouring ommatidia. Simple extrapolation predicts that a drum target with a diameter of 56 cm would affect tsetse flies within a range of about 7 meters, and a 90 cm wide oblong target within a range of 9.5 meters. This helps explain why the wider cylindrical target worked better at recruiting both tsetse and stable flies to land on them in the field, and therefore provides a much higher efficiency than devices of prior art. Such targets would need to be placed at minimum separating distances to avoid interference in the field.

The blue drum includes two critical visual cues known for attracting the tsetse species *G. pallidipes* and *G. swynnertoni.* Approaching and orbiting flies continuously perceive a wider-than-high phthalogen blue rectangle. Moreover, a continuously visible blue-black edge is presented to orbiting flies between the matt black inside and phthalogen blue outside surfaces, a factor that has been shown to be of importance by Green (1984 and 1986). The majority of the flies landed on or near this edge of the blue drum in the wind tunnel. However, adding matt black spirals to elicit a barber's pole effect in the wind tunnel experiments was not justified by significantly added landing efficacy even though it increased the length of the blue-black edges. Our blue drum target design induced the highest number of flies to land in the wind tunnel, even though the barber's drum targets lured slightly more flies to fly to them. We conclude that to induce landing the visual cues need to be stable from the perspective of the approaching tsetse. A three-dimensional target composed of 2 rectangular panels tested at right angle to one another in an earlier study brought no benefit compared to a 2D target as no constant shape and size in perspective was offered to the approaching fly due to changing parallax (Lindh *et al.,* 2009).

Overall, the field trials with the blue cylindrical target covered with sticky film indicate that the device of the invention requires a minimum diameter of some 35 cm to better recruit both tsetse and stable flies to land on it. Stable fly landings on the 40 cm diameter cylindrical target with a blue or black outer surface are the same. Stable fly landings on the blue cylindrical target are far in excess of landings on correspondingly sized existing devices for this biting fly species. Tsetse landings per unit surface area on the blue cylindrical target occur at a higher rate than on the 2D blue target with almost twice the blue surface area. Field trials show that the cylindrical target can be deployed for stable flies either inside or outside dairy cattle facilities. Closing off the open cylindrical target at its upper and lower perimeters with blue disks can serve to increase the number of stable flies landing on it, but this is not the case when the disks used to close off the cylindrical target are black. Field trials with both tsetse and stable flies show that few of them enter the cylindrical target. This indicates that treating the inner surface of the cylindrical target with an insecticide would not be warranted in this independently operating technically novel tool for controlling biting flies.

It has been shown by extensive experimentation that the robust open cylindrical structure of the blue drum of the invention presents a surprising effect to very efficiently attract biting flies to land on it. The device of the invention and its related method as described resolves the problems presented by prior art devices to attract and kill biting flies and has a much higher efficiency to be used as air-dropped visual targets for biting flies such as tsetse and stable flies. Furthermore, the device of the invention is easy to manufacture and is easy to be deployed by non-skilled persons. Moreover, a reinforced central supporting pole with an earth-penetrator capping can double as projectile, whereas the cylindrical target doubles as an aerodynamic stabilizer during free-fall. Since the structure needs to be strong enough to survive the impact of landing the cost of such a target would be higher but this could be offset by the simplicity of deployment over wide open areas. A cheap bolo-string support is appropriate for air-deployment of cylindrical targets in areas under cover of vegetation. The risk of erroneous deployment of such a device is relatively high, but losses would be offset by the simple and cheap target structure.

## Claims

1. A device (1) for attracting and inducing blood-feeding biting flies to land on it and to kill them, comprising a tubular body (2) defining a central axis (4) and a height H defined in the length of said central axis, said tubular body (2) comprising a wall (6) parallel to said central axis (4) and defining lateral cross sections (8) perpendicular to said central axis (4), the device being **characterized in that** it further comprises:
- said tubular body (2) has a first opening (10) defining a first rim (12) and a second opening (20) defining a second rim (22);
- said first rim (12) and second rim (22) are connected by at least a portion of said wall (6);
- said wall (6) has an outer surface (6a) and an inner surface (6b);
- said outer surface (6a) reflects or scatters less than 5% of illuminating light incident on said outer surface (6a) for wavelengths between 600 nm and 700 nm and peak reflectance less than 40% on said outer surface (6a) for wavelengths between 450 nm and 500 nm;
- the color of said outer surface (6a) or said inner surface (6b) is blue or is colourless, said blue colour being defined in the 1960 CIE colour diagram by a x value defined between 0.145 and 0.225 and a y value defined between 0.185 and 0.305, colourless being defined in the 1960 CIE colour diagram by a x value defined between 0.210 and 0.420 and a y value defined between 0.220 and 0.430;
- said outer surface (6a) comprising at least a portion incorporating a substance for retaining and killing insects on or near to said outer surface 6a;
- said inner surface (6b) has a lower reflectivity than the reflectivity of said outer surface (6a), this reflectivity being defined as the fraction of reflected light of the illuminating light incident on said inner surface (6b), for wavelengths between 360 nm and 700 nm, said reflectivity being defined for reflected and/or scattered light by said inner surface (6b);
- the value of said reflectivity of said inner surface (6b) is lower than 20%, preferably lower than 10%, even more preferably lower than 5%,
- the lateral dimension of the tubular body (2), defined in any plane (8) perpendicular to said central axis (4), is greater than said height H.

2. The device (1) according to claim 1 comprising fixing means, preferably a pole (30) and/or suspension wires (32, 33), and/or tape and/or cords and/or elastic fixing means.

3. The device (1) according to any one of claims 1 or 2 wherein said outer surface (6a) or said inner surface (6b) is a black surface.

4. The device (1) according to any one of claims 1 to 3 wherein said blue colour is phthalogen blue having, in the 1960 CIE colour diagram, a x value between 0.145-0.185 and a y value between 0.185-0.245.

5. The device (1) according to any one of claims 1 to 4 wherein said blue is turquoise blue having, in the 1960 CIE colour diagram, a x value between 0.185-0.225 and a y value between 0.245-0.305.

6. The device (1) according to any one of claims 1 to 5 wherein said lateral dimension (8) is greater than 11.5 cm and smaller than 200 cm and is at least 1.5 times bigger than said height H.

7. The device (1) according to any one of claims 1 to 6 wherein said inner surface (6b) is grey or matt black and having a reflection factor between 0.9 x R and 1.1 x R defined over a wavelength range between 350nm and 700 nm, R being the reference reflectivity at 500nm.

8. The device (1) according to any one of claims 1 to 7 wherein said tubular body (2) has a cylindrical shape.

9. The device (1) according to any one of claims 1 to 7 wherein said tubular body (2) has different cross sections (8), along the length of said central axis (4) and defined in a plane perpendicular to said central axis (4), said cross sections (8) having a greatest dimension that is smaller than 2 m and at least 1.5 times greater than said height H.

10. The device (1) according to claims 1 to 9 wherein said first opening (10) and/or second opening (20) is closed by a closure whose outer surface is the same colour as the outer surface of the tubular body.

11. The device (1) according to claims 1 to 10 wherein said first opening (10) and/or second opening (20) is closed by a closure whose outer surface has one of the surface colours of the tubular body.

12. The device (1) according to any one of claims 1 to 11 wherein at least said outer surface (6a) carries, or is impregnated with, an insecticide.

13. A method for attracting and inducing blood-feeding biting flies to land, comprising the steps (a-h) of:
a) providing a device (1) according to any one of claims 1-12;
b) orienting the device (1) so that its central axis (4) is parallel to the local vertical vector of gravitational acceleration and so that the device is fixed above the ground, and optionally providing suspension means,
and at least one of the following steps (c-h):
c) fixing said device (1) above the ground by means of a pole (30) and/or suspending said device (1) from a portion of an indoor or outdoor construction, or from ground vegetation, by said suspension means;
d) setting the tubular body (2) above the ground using said fixing or suspension means, preferably said suspension wires (32, 33) and/or tape and/or cords and/or elastic suspension means, at heights anywhere between 10 cm and 150 cm;
e) setting said tubular body (2) above the ground, using said suspension means, at a height above ground or ground vegetation so that the device (1) is rendered visible to flying biting flies;
f) fixing or suspending said tubular body (2) above the ground either indoors or outdoors so that sunshine can reach it;
g) placing the device (1) at a distance of at least 1 meter from walls or other obstacles in a manner to provide an unobstructed view from all directions of said device (1) by biting flies flying in the vicinity;
h) monitoring biting fly populations by placing a 10 x 15 cm card bearing adhesive on one side that allows it to adhere to the outside surface (6a) of the tubular body wall and with a phthalogen blue or turquoise blue colour on the outward facing side of the card that when covered with insect glue serves to retain alighting biting flies for the purpose of counting them.

14. A method of fabrication of the device (1) according to claims 1-12 comprising the steps (a'-f') of:
a') providing a semi-rigid rectangular piece of transparent plastic sheeting that, when folded along its long end into a circle, is the size of the tubular body of predetermined dimensions;
b') cut a piece of phthalogen-blue or turquoise-blue cloth that is sufficient in area to cover the part of the plastic sheet forming the outside wall of the tubular body, and cut a second piece of low reflectivity textile that is sufficient in area to cover the part of the plastic sheet forming the inside wall of the tubular body;
c') sowing the two rectangular pieces of cloth together along their long sides to form a sleeve that covers the semi-rigid plastic sheet when pulled over it;
d') pre-impregnating said sleeve of cloth with a contact insecticide;
e') pulling the sleeve formed by the two pieces of insecticide-impregnated cloth over the semi-rigid plastic sheet that serves to form the wall of the device (1) in a manner that the phthalogen-blue or turquoise-blue textile is arranged on the outside surface of the tubular body wall and the second textile of low reflectivity is arranged on the inside surface of the tubular body wall;
f') alternatively, applying said steps a', b', c' and e' described and endow the tubular body (2) with at least one surface comprising insect glue to retain biting flies after landing on the tubular body (2).

15. The method of fabrication according to claim 14 comprising after steps e' or f' the steps g', h', i':
g') attach the tubular body to the top of pole (30) placed preferably inside the tubular body (2) with the central axis (4) of the tubular body (2) oriented parallel to said pole (4);
h') attachment of the pole to the tubular body wall with either nails, screws or staples at that point on the tubular body wall where the plastic sheet and layers of textile are joined;
i') alternatively, attach 4 spacers of the same length orthogonally like spokes of a wheel at two heights from the top of the pole placed at the central axis of the tubular body (2) to permit fixing its upper rim 12 and lower rim (22 to the free ends of the spacers in a manner to fix the tubular body equidistant around the top of the pole (30).

16. The method of fabrication according to claim 15 comprising a step of defining and cutting a length of said pole (30) to achieve a predetermined height of said device (1) in case that said device (1) must be fixed in the ground with said pole (30).

## Patentansprüche

1. Vorrichtung (1), um blutsaugende Stechfliegen anzuziehen und zu veranlassen, sich darauf niederzulassen, umfassend einen röhrenförmigen Körper (2), der eine Mittelachse (4) und eine Höhe H definiert, die in der Länge der Mittelachse definiert ist, wobei der röhrenförmige Körper (2) eine Wand (6) umfasst, die parallel zur Mittelachse (4) ist und seitliche Querschnitte (8) definiert, die senkrecht zur Mittelachse (4) sind,
wobei die Vorrichtung **dadurch gekennzeichnet ist, dass** sie ferner umfasst:
- der röhrenförmige Körper (2) hat eine erste Öffnung (10), die einen ersten Rand (12) definiert, und eine zweite Öffnung (20), die einen zweiten Rand (22) definiert;
- der erste Rand (12) und der zweite Rand (22) sind durch mindestens einen Abschnitt der Wand (6) verbunden;
- die Wand (6) weist eine Außenfläche (6a) und eine Innenfläche (6b) auf;
- die Außenfläche (6a) reflektiert oder streut bei Wellenlängen zwischen 600 nm und 700 nm weniger als 5 % des auf die Außenfläche (6a) auftreffenden Beleuchtungslichts und der Spitzenreflexionsgrad auf der Außenfläche (6a) beträgt bei Wellenlängen zwischen 450 nm und 500 nm weniger als 40 %;
- die Farbe der Außenfläche (6a) oder der Innenfläche (6b) ist blau oder farblos, wobei die blaue Farbe im CIE-Farbdiagramm von 1960 durch einen x-Wert zwischen 0,145 und 0,225 und einen y-Wert zwischen 0, 185 und 0,305 definiert ist, wobei farblos im CIE-Farbdiagramm von 1960 durch einen x-Wert zwischen 0,210 und 0,420 und einen y-Wert zwischen 0,220 und 0,430 definiert ist;
- die Außenfläche (6a) umfasst mindestens einen Abschnitt, der eine Substanz zum Festhalten und Töten von Insekten auf oder in der Nähe der Außenfläche 6a umfasst;
- die Innenfläche (6b) weist eine geringere Reflektivität auf als die Außenfläche (6a), wobei diese Reflektivität als der Anteil des reflektierten Lichts des auf die Innenfläche (6b) auftreffenden Beleuchtungslichts bei Wellenlängen zwischen 360 nm und 700 nm definiert ist, wobei die Reflektivität für von der Innenfläche (6b) reflektiertes und/oder gestreutes Licht definiert ist;
- der Wert der Reflektivität der Innenfläche (6b) ist kleiner als 20 %, vorzugsweise kleiner als 10 %, sogar noch bevorzugter kleiner als 5 %,
- die seitliche Abmessung des röhrenförmigen Körpers (2), definiert in einer beliebigen zur Mittelachse (4) senkrechten Ebene (8), ist größer als die Höhe H.

2. Vorrichtung (1) nach Anspruch 1, umfassend Befestigungsmittel, vorzugsweise eine Stange (30) und/oder Aufhängedrähte (32, 33) und/oder Band und/oder Schnüre und/oder elastische Befestigungsmittel.

3. Vorrichtung (1) nach einem der Ansprüche 1 oder 2, wobei die Außenfläche (6a) oder die Innenfläche (6b) eine schwarze Oberfläche ist.

4. Vorrichtung (1) nach einem der Ansprüche 1 bis 3, wobei die blaue Farbe Phthalogen-Blau mit einem x-Wert zwischen 0,145 und 0, 185 und einem y-Wert zwischen 0, 185 und 0,245 im CIE-Farbdiagramm von 1960 ist.

5. Vorrichtung (1) nach einem der Ansprüche 1 bis 4, wobei die blaue Farbe Türkisblau mit einem x-Wert zwischen 0, 185 und 0,225 und einem y-Wert zwischen 0,245 und 0,305 im CIE-Farbdiagramm von 1960 ist.

6. Vorrichtung (1) nach einem der Ansprüche 1 bis 5, wobei die seitliche Abmessung (8) größer als 11,5 cm und kleiner als 200 cm und mindestens 1,5-mal größer als die Höhe H ist.

7. Vorrichtung (1) nach einem der Ansprüche 1 bis 6, wobei die Innenfläche (6b) grau oder mattschwarz ist und einen Reflexionsfaktor zwischen 0,9 x R und 1,1 x R, definiert über einen Wellenlängenbereich zwischen 350nm und 700 nm, aufweist, wobei R die Referenzreflektivität bei 500nm ist.

8. Vorrichtung (1) nach einem der Ansprüche 1 bis 7, wobei der röhrenförmige Körper (2) eine zylindrische Form aufweist.

9. Vorrichtung (1) nach einem der Ansprüche 1 bis 7, wobei der röhrenförmige Körper (2) verschiedene Querschnitte (8) entlang der Länge der Mittelachse (4) und definiert in einer zur Mittelachse (4) senkrechten Ebene aufweist, wobei die Querschnitte (8) eine größte Abmessung aufweisen, die kleiner als 2 m und mindestens 1,5-mal größer als die Höhe H ist.

10. Vorrichtung (1) nach den Ansprüchen 1 bis 9, wobei die erste Öffnung (10) und/oder die zweite Öffnung (20) durch einen Verschluss verschlossen ist, dessen Außenfläche dieselbe Farbe wie die Außenfläche des röhrenförmigen Körpers hat.

11. Vorrichtung (1) nach den Ansprüchen 1 bis 10, wobei die erste Öffnung (10) und/oder die zweite Öffnung (20) durch einen Verschluss verschlossen ist, dessen Außenfläche eine der Oberflächenfarben des röhrenförmigen Körpers hat.

12. Vorrichtung (1) nach einem der Ansprüche 1 bis 11, wobei zumindest die Außenfläche (6a) ein Insektizid trägt oder damit durchtränkt ist.

13. Verfahren, um blutsaugende Stechfliegen anzuziehen und zum Niederlassen zu veranlassen, das die folgenden Schritte (a-h)
a) Bereitstellen einer Vorrichtung (1) nach einem der Ansprüche 1 bis 12;
b) Ausrichten der Vorrichtung (1) derart, dass ihre Mittelachse (4) parallel zum lokalen vertikalen Vektor der Schwerebeschleunigung ist, und derart, dass die Vorrichtung über dem Boden befestigt ist, und wahlweise Bereitstellen von Aufhängemitteln,
und mindestens einen der folgenden Schritte (c-h) umfasst:
c) Befestigen der Vorrichtung (1) über dem Boden mithilfe einer Stange (30) und/oder Aufhängen der Vorrichtung (1) an einem Teil einer Innen- oder Außenkonstruktion oder an Bodenvegetation mithilfe der Aufhängemittel;
d) Einrichten des röhrenförmigen Körpers (2) über dem Boden unter Verwendung der Befestigungs- oder Aufhängemittel, vorzugsweise der Aufhängedrähte (32, 33) und/oder von Band und/oder von Schnüren und/oder von elastischen Aufhängemitteln auf einer beliebigen Höhe zwischen 10 cm und 150 cm;
e) Einrichten des röhrenförmigen Körpers (2) über dem Boden unter Verwendung der Aufhängemittel auf einer Höhe über dem Boden oder der Bodenvegetation derart, dass die Vorrichtung (1) für fliegende Stechfliegen sichtbar ist;
f) Befestigen oder Aufhängen des röhrenförmigen Körpers (2) über dem Boden entweder im Innenbereich oder im Außenbereich derart, dass er von Sonnenlicht erreicht werden kann;
g) Platzieren der Vorrichtung (1) in einem Abstand von mindestens 1 Meter von Wänden oder anderen Hindernissen in einer Weise, die für in der Nähe fliegende Stechfliegen eine ungehinderte Sicht auf die Vorrichtung (1) aus allen Richtungen gewährleistet;
h) Überwachen der Stechfliegenpopulationen durch Platzieren einer 10 x 15 cm großen Karte, die auf einer Seite Klebstoff trägt, der es ihr ermöglicht, an der Außenfläche (6a) der Wand des röhrenförmigen Körpers anzuhaften, und mit einer phthalogen-blauen oder türkisblauen Farbe auf der nach außen gerichteten Seite der Karte, die, wenn sie mit Insektenleim bedeckt ist, dazu dient, landende Stechfliegen zu dem Zweck festzuhalten, sie zu zählen.

14. Verfahren zum Herstellen der Vorrichtung (1) nach den Ansprüchen 1 bis 12, das die folgenden Schritte (a'-f') umfasst:
a') Bereitstellen eines halbstarren rechteckigen Stücks transparenter Kunststofffolie, das, wenn es entlang seines langen Endes zu einem Kreis gewickelt wird, die Größe des röhrenförmigen Körpers mit vorgegebenen Abmessungen hat;
b') Zuschneiden eines Stücks phthalogen-blauen oder türkisblauen Stoffs, dessen Fläche ausreicht, um den Teil der Kunststofffolie abzudecken, der die Außenwand des röhrenförmigen Körpers bildet, und Zuschneiden eines zweiten Stücks eines schwach reflektierenden Gewebes, dessen Fläche ausreicht, um den Teil der Kunststofffolie abzudecken, der die Innenwand des röhrenförmigen Körpers bildet;
c') Zusammennähen der beiden rechteckigen Stoffstücke entlang ihrer langen Seiten derart, dass eine Hülle entsteht, die die halbstarre Kunststofffolie bedeckt, wenn sie über sie gezogen wird;
d') Durchtränken der Stoffhülle mit einem Kontaktinsektizid;
e') Ziehen der aus den beiden mit Insektizid durchtränkten Stoffstücken gebildeten Hülle über die halbstarre Kunststofffolie, die zum Bilden der Wand der Vorrichtung (1) dient, in einer Weise, dass das phthalogen-blaue oder türkisblaue Gewebe auf der Außenfläche der Wand des röhrenförmigen Körpers angeordnet ist und das zweite Gewebe mit geringer Reflektivität auf der Innenfläche der Wand des röhrenförmigen Körpers angeordnet ist;
f') alternativ dazu Durchführen der beschriebenen Schritte a', b', c' und e' und Ausstatten des röhrenförmigen Körpers (2) mit mindestens einer Oberfläche, die Insektenleim umfasst, um Stechfliegen nach dem Niederlassen auf dem röhrenförmigen Körper (2) festzuhalten.

15. Herstellungsverfahren nach Anspruch 14, umfassend nach Schritt e' oder f' die Schritte g', h' und i':
g') Befestigen des röhrenförmigen Körpers am oberen Ende einer Stange (30), die vorzugsweise innerhalb des röhrenförmigen Körpers (2) platziert ist, wobei die Mittelachse (4) des röhrenförmigen Körpers (2) parallel zu der Stange (4) ausgerichtet ist;
h') Befestigen der Stange an der Wand des röhrenförmigen Körpers mit Nägeln, Schrauben oder Klammern an der Stelle der Wand des röhrenförmigen Körpers, an der die Kunststofffolie und die Gewebeschichten verbunden sind;
i') alternativ dazu Befestigen von 4 gleich langen Abstandshaltern orthogonal wie die Speichen eines Rades in zwei Höhen vom oberen Ende der Stange, die an der Mittelachse des röhrenförmigen Körpers (2) platziert ist, um die Befestigung seines oberen Rands 12 und seines unteren Rands (22) an den freien Enden der Abstandshalter derart zu ermöglichen, dass der röhrenförmige Körper im gleichen Abstand um das obere Ende der Stange (30) herum befestigt ist.

16. Herstellungsverfahren nach Anspruch 15, umfassend einen Schritt des Definierens und Zuschneidens einer Länge der Stange (30), um eine vorgegebene Höhe der Vorrichtung (1) für den Fall zu erhalten, dass die Vorrichtung (1) mit der Stange (30) im Boden befestigt werden muss.

## Revendications

1. Un appareil (1) pour attirer les mouches piqueuses hématophages et les inciter à s'y poser pour les tuer, composé d'un corps tubulaire (2) définissant un axe central (4) et une hauteur H définie dans la longueur dudit axe central, dudit corps tubulaire (2), comprenant une paroi parallèle audit axe central (4) et définissant des sections transversales latérales (8) perpendiculaires audit axe central (4), l'appareil étant **caractérisé en outre par** les éléments :
- ledit corps tubulaire (2) comporte une première ouverture (10) définissant un premier bord (12) et une deuxième ouverture (20) définissant un second bord (22);
- lesdits premier bord (12) et second bord (22) sont reliés par au moins une portion de ladite paroi (6) ;
- ladite paroi (6) a une surface extérieure (6a) et une surface intérieure (6b);
- ladite surface extérieure (6a) réfléchit ou diffuse moins de 5% de l'éclairage de la lumière incidente sur ladite surface pour les longueurs d'ondes entre 600 nm et 700 nm et la réflectance maximale moins de 40% sur ladite surface extérieure (6a) pour des longueurs d'ondes entre 450 nm et 500 nm ;
- la couleur de ladite surface extérieure (6a) ou de ladite surface intérieure (6b) est bleue ou incolore, ladite couleur bleue étant définie dans le diagramme de couleurs CIE 1960 par une valeur x définie entre 0.145 et 0.225 et une valeur y définie entre 0.185 et 0.305, l'incolore étant définie dans le diagramme de couleurs CIE 1960 par une valeur x définie entre 0.210 et 0.420 et une valeur y définie entre 0.220 et 0.430 ;
- ladite surface extérieure (6a) comprenant au moins une portion incorporant une substance pour retenir et tuer les insectes sur ou près de ladite surface extérieure 6a ;
- ladite surface intérieure (6b) a une réflectivité inférieure à la réflectivité de ladite surface extérieure (6a), cette réflectivité étant définie comme une fraction de la lumière réfléchie de l'éclairage de la lumière incidente sur ladite
surface intérieure (6b), pour les longueurs d'ondes entre 360 nm et 700 nm, ladite réflectivité étant définie pour la lumière réfléchie et/ou diffusée par ladite surface intérieure (6b) ;
- la valeur de ladite réflectivité de ladite surface intérieure (6b) est inférieure à 20% et préférablement inférieure à 10% et préférablement encore inférieure à 5%,
- la dimension latérale du corps tubulaire (2) définie dans quel que plan (8) que ce soit perpendiculaire audit axe central (4) est plus grande que ladite hauteur H.

2. L'appareil (1) selon la revendication 1 déterminant les moyens, préférablement un poteau (30) et/ou des fils de suspension (32,33), et/ou autres moyens de fixation tels que bandes et/ou cordes et/ou élastiques.

3. L'appareil (1) selon toute revendication 1 ou 2 dans lequel ladite surface extérieure (6a) ou ladite surface intérieure (6b) est une surface noire.

4. L'appareil (1) selon toute revendication de 1 à 3 dans lequel ladite couleur bleue est un bleu de phtalogène ayant, dans le diagramme de couleurs 1960 CIE, une valeur x entre 0.145-0.185 et une valeur y entre 0.185-0.245.

5. L'appareil (1) selon toute revendication de 1 à 4 dans lequel ledit bleu est un bleu turquoise ayant, dans le diagramme de couleurs 1960 CIE, une valeur x entre 0.185-0.225 et une valeur y entre 0.245-0.305.

6. L'appareil (1) selon toute revendication de 1 à 5 dans lequel ladite dimension latérale (8) est supérieure à 11.5 cm et inférieure à 200 cm et est au moins 1.5 fois plus grande que ladite hauteur H.

7. L'appareil (1) selon toute revendication 1 à 6 dans lequel ladite surface intérieure (6b) est grise ou noir mat et a un facteur de réflexion entre 0.9 x R et 1.1 x R défini sur une gamme de longueurs d'ondes entre 350 nm et 700 nm, R étant la référence de réflectivité à 500 nm.

8. L'appareil (1) selon toute revendication 1 à 7 dans lequel le corps tubulaire (2) a une forme cylindrique.

9. L'appareil (1) selon toute revendication 1 à 7 dans lequel le corps tubulaire (2) a différentes sections transversales (8), le long de la longueur dudit axe central (4) et définies sur un plan perpendiculaire audit axe central (4), lesdites sections transversales (8) ayant une dimension maximale inférieure à 2 m et au moins 1.5 fois supérieure à ladite hauteur H.

10. L'appareil (1) selon les revendications 1 à 9 dans lequel ladite ouverture (10) et/ou la seconde ouverture (20) est fermée par une fermeture dont la surface extérieure est de la même couleur que la surface du corps tubulaire.

11. L'appareil (1) selon les revendications 1 à 10 dans lequel ladite première ouverture (10) et/ou la seconde ouverture (20) est fermée par une fermeture dont la surface extérieure a l'une des couleurs de la surface du corps tubulaire.

12. L'appareil (1) selon toute revendication de 1 à 11 dans lequel au moins ladite surface extérieure (6a) porte un insecticide ou est imprégnée par insecticide.

13. Une méthode pour attirer et inciter les mouches piqueuses hématophages à se poser, comprenant les étapes (a-h) :
a) fournisser un appareil (1) selon n'importe quelle revendication de 1 à 12 ;
b) orienter l'appareil (1) de manière que son axe central (4) soit parallèle au vecteur vertical local de l'accélération gravitationnelle et de manière à ce que l'appareil soit fixé au-dessus du sol, et éventuellement comportant des moyens de suspension,
et comprenant au moins l'une des étapes suivantes :
c) fixer ledit appareil (1) au-dessus du sol au moyen d'un poteau (30) et/ou suspendant ledit appareil (1) depuis une partie d'une construction intérieure ou extérieure ou depuis une végétation au sol par lesdits moyens de suspension
d) installer le corps tubulaire (2) au-dessus du sol en utilisant lesdits moyens de fixation ou de suspension, préférablement lesdits fils de suspension (32, 33) et/ou bande et/ou cordes et/ou moyens de suspension élastiques, à des hauteurs n'importe où entre 10 cm et 150 cm ;
e) installer ledit corps tubulaire (2) au-dessus du sol, en utilisant lesdits moyens de suspension, à une hauteur au-dessus du sol ou de la végétation de sol de manière à ce que l'appareil (1) soit rendu visible pour les mouches piqueuses en vol ;
f) installer ledit corps tubulaire (2) au-dessus du sol à l'extérieur ou à l'intérieur de manière que le soleil puisse l'atteindre ;
g) plaçerl'appareil (1) à une distance d'au moins 1 m des murs ou d'autres obstacles de manière à procurer une vue dégagée depuis toutes les directions dudit appareil (1) par les mouches piqueuses se trouvant à proximité ;
h) surveiller les populations de mouches piqueuses en plaçant une carte de 10 x 15 cm portant sur un côté un adhésif qui lui permet d'adhérer à la surface extérieure (6a) de la paroi du corps tubulaire et avec une couleur bleu de phtalogène ou bleu turquoise sur le côté de la carte donnant sur l'extérieur qui lorsque couverte de colle à insectes serve à retenir les mouches piqueuses qui se sont posées afin de les compter.

14. Une méthode de fabrication de l'appareil (1) selon les revendications 1-12 comprenant les étapes (a'-f') :
a') fournisser une feuille de plastique transparent rectangulaire semi-rigide qui, lorsque enroulée en un cercle sur sa longueur, soit de la taille des dimensions prédéterminées du corps tubulaire ;
b') fournisser un morceau de tissu bleu de phtalogène ou bleu turquoise de dimensions suffisantes pour couvrir la partie de la feuille de plastique formant la paroi extérieure du corps tubulaire, et un deuxième morceau de textile à faible réflectivité qui soit de dimension suffisante pour couvrir la partie de la feuille de plastique formant la paroi intérieure du corps tubulaire ;
c') coudre ensemble les deux morceaux de tissu rectangulaires sur leurs longueurs de manière à former un manchon couvrant la feuille de plastique semi-rigide quand elle est y enfilée ;
d') pré-imprégner ledit manchon en tissu avec un insecticide de contact ;
e') enfiler la feuille de plastique semi-rigide qui sert de paroi à l'appareil (1) dans le manchon formé par les deux morceaux de tissu imprégnés d'insecticide de manière que le textile bleu de phtalogène ou bleu turquoise soit présenté sur la surface extérieure du corps tubulaire et le second textile de faible réflectivité soit présenté sur la surface interne de la paroi du corps tubulaire ;
f) ou comme alternative appliquer les étapes a', b', c' et e' décrites et doter le corps tubulaire (2) d'au moins une surface comportant de la colle à insectes pour retenir les mouches piqueuses après qu'elles se sont posées sur le corps tubulaire (2).

15. La méthode de fabrication selon revendication 14 comprenant après les étapes e' ou f' les étapes g', h', i' :
g') fixer le corps tubulaire en haut du poteau (30) placé de préférence à l'intérieur du corps tubulaire (2) avec l'axe central (4) du corps tubulaire orienté parallèlement audit poteau (4);
h') fixation du poteau à la paroi du corps tubulaire avec soit des clous, des vis, ou des agrafes à l'endroit de la paroi du corps tubulaire où la feuille de plastique et les couches de textile sont jointes ;
i') ou comme alternative, attacher 4 espaceurs de même longueur orthogonalement comme les rayons d'une roue à deux hauteurs depuis le haut du poteau placé à l'axe central du corps tubulaire (2) pour permettre de fixer son bord supérieur (12) et son bord inférieur (22) aux extrémités libres
des espaceurs de manière à fixer le corps tubulaire de façon équidistante autour du sommet du poteau (30).

16. La méthode de fabrication selon revendication 15 comportant une étape pour définir et couper une longueur dudit poteau (30) pour obtenir une hauteur prédéterminée dudit appareil (1) dans le cas où ledit appareil (1) doit être fixé dans le sol avec ledit poteau (30).
